# EUROPÄISCHE PATENTSCHRIFT

(11) **EP 3 152 263 B1**
(45) Veröffentlichungstag und Bekanntmachung des Hinweises auf die Patenterteilung: **13.06.2018**
(21) Anmeldenummer: 15720016.3
(22) Anmeldetag: 23.04.2015
(51) Int. Cl.: C09D 5/10

(54) **BESCHICHTUNGSZUSAMMENSETZUNG MIT KORROSIONSSCHUTZWIRKUNG**
COATING COMPOSITION WITH ANTICORROSIVE EFFECT
COMPOSITION DE REVÊTEMENT ANTICORROSIVE

(30) Priorität: 05.06.2014 EP 14171249
(43) Veröffentlichungstag der Anmeldung: 12.04.2017
(73) Patentinhaber: BASF Coatings GmbH, 48165 Münster (DE)
(72) Erfinder: SEEGER, Dirk, 26125 Oldenburg (DE); KAUNE, Martin, 26125 Oldenburg (DE); THEIL, Hubert, 200120 Shanghai (CN); HOMANN, Nadine, 26131 Oldenburg (DE); PIECHA, Christoph, 26935 Stadland (DE); MÜHLMEYER, Justina, 49186 Bad Iburg (DE)
(74) Vertreter: BASF IP Association
(86) Internationale Anmeldenummer: PCT/EP2015/058780
(87) Internationale Veröffentlichungsnummer: WO 2015/185266

(56) Entgegenhaltungen:
- WO-A1-03/089507
- WO-A1-2005/051551
- WO-A1-2007/104121
- US-A1- 2006 225 612

## Beschreibung

Die vorliegende Erfindung betrifft eine Beschichtungszusammensetzung enthaltend wenigstens ein Bindemittel (A) umfassend wenigstens ein polymeres Harz (A1) und wenigstens ein Vernetzungsmittel (A2), wenigstens ein Korrosionsschutzpigment (B) und wenigstens ein organisches Lösemittel (C), wobei (B) eine Legierung aus Zn und Mg und gegebenenfalls wenigstens einem weiteren Metall und/oder Halbmetall ist, wobei die Beschichtungszusammensetzung eine Pigmentvolumenkonzentration (PVK) in einem Bereich von 5,0 bis 25,0 % aufweist und das Korrosionsschutzpigment (B) in einer Menge in einem Bereich von 5,0 bis 25,0 Gew.-%, bezogen auf das Gesamtgewicht der Beschichtungszusammensetzung, enthält, ihre Verwendung zur zumindest teilweisen Beschichtung eines metallischen Substrats mit einer Grundierungsschicht, ein Verfahren zur zumindest teilweisen Beschichtung eines solchen Substrats mit einer solchen Grundierungsschicht, ein damit zumindest teilweise beschichtetes Substrat sowie ein aus einem solchen Substrat hergestellten Gegenstand oder hergestelltes Bauteil.

In vielen Bereichen wie beispielsweise dem Bereich des Flugzeugbaus und der Seefahrt sowie im Fall von großtechnischen maschinellen Anlagen wie Windenergieanlagen müssen die jeweiligen eingesetzten metallischen Bauteile, insbesondere Bauteile aus Aluminium und/oder Aluminiumlegierungen üblicherweise gegen Korrosion geschützt werden. Die Anforderungen an den zu erzielenden Korrosionsschutz sind sehr hoch, insbesondere da seitens der Hersteller oftmals über viele Jahre eine Garantie gegen Durchrostung gewährt wird. Zudem werden insbesondere im Bereich der Luftfahrt sehr strenge Anforderungen an den Korrosionsschutz gestellt. Solch ein Korrosionsschutz wird üblicherweise durch eine Beschichtung der Bauteile oder der zu ihrer Herstellung eingesetzten Substrate mit wenigstens einer dafür geeigneten Beschichtung erzielt.

Zur Erzielung eines ausreichenden Korrosionsschutzes von metallischen Substraten wie Aluminium oder Aluminiumlegierungen oder auch gegebenenfalls verzinkten Stählen werden üblicherweise Korrosionsschutzpigmente auf Basis von chromhaltigen Verbindungen wie Chromat eingesetzt, die zwar einen guten Korrosionsschutz bieten, jedoch aufgrund deren Toxizität aus gesundheitlichen und ökologischen Gründen nachteilig sind.

Aus WO 2011/058021 A1 sind Beschichtungszusammensetzungen bekannt, die Korrosionsschutzpigmente enthalten. Bei den Korrosionsschutzpigmenten handelt es sich um Legierungen, die ausschließlich aus Zink und Magnesium bestehen. Auch aus WO 2014/029779 A2 und WO 2014/029781 A2 sind Beschichtungszusammensetzungen bekannt, die Korrosionsschutzpigmente aufweisen, welche wiederum wenigstens Zink und Magnesium enthalten.

Ein Nachteil der aus WO 2011/058021 A1 bekannten Beschichtungszusammensetzungen liegt darin, dass die darin offenbarten Beschichtungszusammensetzungen einen vergleichsweise hohen Korrosionsschutzpigmentgehalt aufweisen: der Anteil an Korrosionsschutzpigmenten, bezogen auf das Gesamtgewicht der exemplarischen Beschichtungszusammensetzungen gemäß WO 2011/058021 A1, beträgt mehr als 80 Gew.-% und die Beschichtungszusammensetzungen weisen eine Pigmentvolumenkonzentration (PVK) >65% auf. Auch der Anteil der Korrosionsschutzpigmente, die in den exemplarischen Beschichtungszusammensetzungen gemäß WO 2014/029779 A2 und WO 2014/029781 A2 offenbart sind, ist vergleichsweis hoch und liegt bei >30 Gew.-%. Nachteilig an diesen bekannten Beschichtungszusammensetzungen ist insbesondere, dass mittels dieser beschichtete Substrate nur ungenügende Haftungseigenschaften zu darüber liegenden Beschichtungen wie beispielsweise Decklackbeschichtungen aufweisen und es daher insbesondere bei Belastung zu einer unerwünschten Delaminierung kommen kann.

Es besteht ein Bedarf an Beschichtungszusammensetzungen zur zumindest teilweisen Beschichtung von insbesondere metallischen Substraten mit einer Grundierungsschicht, welche - insbesondere im Hinblick auf den Ersatz konventioneller Beschichtungszusammensetzungen - ein ökonomischeres und ökologischeres Beschichtungsverfahren als herkömmliche eingesetzte Beschichtungszusammensetzungen ermöglichen, aber dennoch zumindest in gleichem Maße dazu geeignet sind, die erforderliche Korrosionsschutzwirkung zu erzielen, ohne dabei jedoch irgendwelche Nachteile hinsichtlich ihrer Haftungseigenschaften nach entsprechender Beschichtung von Substraten aufzuweisen, insbesondere hinsichtlich der Haftung zu weiteren darüber liegenden Schichten.

Eine Aufgabe der vorliegenden Erfindung ist es daher, eine Beschichtungszusammensetzung zur zumindest teilweisen Beschichtung eines vorzugsweise metallischen Substrats mit einer Grundierungsschicht zur Verfügung zu stellen, welche gegenüber den aus dem Stand der Technik bekannten Beschichtungszusammensetzungen Vorteile aufweist. Insbesondere ist es eine Aufgabe der vorliegenden Erfindung, solche Beschichtungszusammensetzungen zur Verfügung zu stellen, die ein ökologischeres Beschichtungsverfahren als herkömmliche eingesetzte Beschichtungszusammensetzungen ermöglichen, d.h. welche es beispielsweise ermöglichen, auf die üblicherweise durchzuführende Chromatierung mit beispielsweise Strontiumchromat zu verzichten, aber mit welchen dennoch die zumindest gleiche und insbesondere eine verbesserte oder zumindest gleiche Korrosionsschutzwirkung erzielt werden kann und mit welchem zudem eine gute Haftung des entsprechend beschichteten Substrats zu weiteren darüber liegenden Beschichtungen erzielt werden kann.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher eine Beschichtungszusammensetzung umfassend
wenigstens ein Bindemittel (A) umfassend wenigstens ein polymeres Harz (A1) und wenigstens ein Vernetzungsmittel (A2),
wenigstens ein Korrosionsschutzpigment (B) und
wenigstens ein organisches Lösemittel (C) und gegebenenfalls wenigstens eine weitere Komponente (D),
zur zumindest teilweisen Beschichtung eines metallischen Substrats mit einer Grundierungsschicht, dadurch gekennzeichnet, dass
das Korrosionsschutzpigment (B) eine Legierung aus Zink (Zn) und Magnesium (Mg) und gegebenenfalls wenigstens einem weiteren Metall und/oder Halbmetall ist, welche Zink in einer Menge von wenigstens 70 Gew.-%, Magnesium in einer Menge von wenigstens 20 Gew.-% und das gegebenenfalls vorhandene wenigstens eine weitere Metall und/oder Halbmetall in einer Menge von höchstens 10 Gew.-% enthält, jeweils bezogen auf das Gesamtgewicht des Korrosionsschutzpigments (B), wobei sich die im Korrosionsschutzpigment (B) enthaltenen Mengen in Gew.-% an Zink, Magnesium und dem gegebenenfalls vorhandenen wenigstens einen weiteren Metall und/oder Halbmetall insgesamt auf 100 Gew.-% addieren,
die Beschichtungszusammensetzung eine Pigmentvolumenkonzentration (PVK) in einem Bereich von 5,0 bis 25,0 % aufweist und dadurch, dass
die Beschichtungszusammensetzung das Korrosionsschutzpigment (B) in einer Menge in einem Bereich von 5,0 bis 25,0 Gew.-%, bezogen auf das Gesamtgewicht der Beschichtungszusammensetzung, enthält.

Die erfindungsgemäße Beschichtungszusammensetzung dient somit zur Herstellung einer Grundierungsschicht auf einer Substratoberfläche eines vorzugsweise metallischen Substrats.

Es wurde überraschend gefunden, dass es die erfindungsgemäße Beschichtungszusammensetzung, insbesondere wenn diese in einem Verfahren zur zumindest teilweisen Beschichtung eines Substrats mit einer Grundierungsschicht eingesetzt wird, ermöglicht, auf eine insbesondere üblicherweise im Bereich des Flugzeugbaus durchzuführende unter toxikologischen Gesichtspunkten bedenkliche Chromatierung des eingesetzten Substrat verzichten zu können, wodurch das entsprechende Beschichtungsverfahren damit insgesamt ökologischer und ökonomischer als herkömmliche Verfahren gestaltet werden kann.

Insbesondere wurde überraschend gefunden, dass es die erfindungsgemäße Beschichtungszusammensetzung ermöglicht, zumindest teilweise mit einer Grundierungsschicht beschichtete Substrate zur Verfügung zu stellen, die im Vergleich zu mittels herkömmlich eingesetzten Beschichtungszusammensetzungen hinsichtlich beschichteten Substraten ihrer Korrosionsschutzwirkung zumindest keine Nachteile und insbesondere Vorteile aufweisen.

Ferner wurde überraschend gefunden, dass die erfindungsgemäße Beschichtungszusammensetzung bei der Applikation auf ein Substrat eine homogene Beschichtung ermöglicht. Dabei liegt auch das wenigstens eine vorzugsweise plättchenförmige Korrosionsschutzpigment (B) homogen verteilt in der Beschichtung vor. Zudem wurde überraschenderweise gefunden, dass sich die erfindungsgemäße Beschichtungszusammensetzung durch eine gegenüber aus dem Stand der Technik bekannten Beschichtungszusammensetzungen verbesserte Barrierewirkung gegen Sauerstoff und/oder Feuchtigkeit auszeichnet und zudem gut überlackierbar ist.

Überraschenderweise wurde ferner gefunden, dass auf einem geeigneten Substrat aufgebrachte erfindungsgemäße Beschichtungszusammensetzungen sehr gute Haftungen zu weiteren darüber liegenden Beschichtungen wie einer darüber aufgebrachten Decklackschicht aufweisen und es insbesondere auch bei Belastungen nicht zu einer Delaminierung einer solchen darüber aufgebrachten Beschichtung wie einer Decklackschicht von dem mit der erfindungsgemäßen Beschichtungs-zusammensetzung beschichteten Substrat kommt, was insbesondere auf den konkreten Bereich einer Pigmentvolumenkonzentration (PVK) von 5,0 bis 25,0 % und/oder einer konkreten Menge des Korrosionsschutzpigments (B) in einem Bereich von 5,0 bis 25,0 Gew.-%, bezogen auf das Gesamtgewicht der Beschichtungszusammensetzung, zurückzuführen ist: entsprechende Vergleichsbeschichtungszusammensetzungen mit höherem Korrosionsschutzpigment-Gehalt >25 Gew.-% und/oder einer PVK >25%, beispielsweise gemäß WO 2014/029779 A2 und WO 2014/029781 A2, weisen diesbezüglich entsprechende Nachteile auf.

Der Begriff "umfassend" im Sinne der vorliegenden Erfindung, beispielsweise in Zusammenhang mit der erfindungsgemäßen Beschichtungszusammensetzung, hat in einer bevorzugten Ausführungsform die Bedeutung "bestehend aus". Dabei können - hinsichtlich der erfindungsgemäßen Beschichtungszusammensetzung - in dieser bevorzugten Ausführungsform neben den Komponenten (A), (B) und (C) eine oder mehrere der weiteren nachstehend genannten optional in der erfindungsgemäßen Beschichtungszusammensetzung enthaltenen Komponenten wie beispielsweise eine oder mehrere der Komponenten (D) in der Beschichtungszusammensetzung enthalten sein. Alle Komponenten können jeweils in einer ihrer nachstehend genannten bevorzugten Ausführungsformen in der erfindungsgemäßen Beschichtungszusammensetzung enthalten sein.

### Substrat

Als erfindungsgemäß eingesetztes Substrat eignen sich alle üblicherweise eingesetzten und dem Fachmann bekannten Substrate, insbesondere metallische Substrate. Vorzugsweise sind die erfindungsgemäß eingesetzten Substrate ausgewählt aus der Gruppe bestehend aus Eisen, Stahl, Aluminium oder Legierungen davon, insbesondere aus auf Aluminium basierten Legierungen, wobei diese Legierungen gegebenenfalls wenigstens ein weiteres Metall und/oder Halbmetall aufweisen können wie beispielsweise Kupfer. Vorzugsweise weisen die Substrate dabei jeweils zumindest eine Oberfläche aus Eisen, Stahl, Aluminium oder Legierungen davon auf, besonders bevorzugt bestehen sie vollständig aus Eisen, Stahl, Aluminium oder Legierungen davon. Als Stahl eignet sich vorzugsweise Stahl ausgewählt aus der Gruppe bestehend aus kaltgewalztem Stahl, warmgewalzter Stahl, hochfester Stahl, verzinktem Stahl wie tauchverzinktem Stahl, legierungsverzinktem Stahl (wie beispielsweise Galvalume®, Galvannealed® oder Galfan®) und aluminiertem Stahl. Beispiele für geeignete Legierungen sind Aluminium-Kupfer-Legierungen. Ganz besonders bevorzugt sind Substrate aus Aluminium oder Aluminiumhaltige Legierungen.

Die eingesetzten Substrate können dabei insbesondere Teile von im Flugzeugbau zum Bau eines Flugzeugs eingesetzten Teilen sein. Bevor das jeweilige Substrat eingesetzt wird, erfolgt vorzugsweise eine Reinigung und/oder Entfettung des Substrats.

Das erfindungsgemäß eingesetzte vorzugsweise metallische Substrat kann noch vor einer Beschichtung mit der erfindungsgemäßen Beschichtungszusammensetzung mit einer geeigneten vorzugsweise wässrigen Vorbehandlungs-Zusammensetzung vorbehandelt werden. Entsprechende Vorbehandlungs-Zusammensetzungen sind dem Fachmann bekannt und sind kommerziell erhältlich. Beispielsweise können Substrate aus Aluminium, basierend auf Aluminium oder einer Aluminiumhaltigen Legierung mittels einer Weinsäure-Schwefelsäure-Anodisierung (TSA) gemäß DIN EN 4704 (Datum: Mai 2012) vorbehandelt werden. Beispielsweise können Substrate aus Stahl oder basierend auf Stahl mittels einer Vorbehandlung gemäß DIN EN ISO 12944-4 (Datum: Juli 1998) vorbehandelt werden. Vorzugsweise weisen die eingesetzten Substrate aus Stahl oder basierend auf Stahl einen Stahlgrad von wenigstens 2,5 auf. Der Stahlgrad kann gemäß DIN EN ISO 8501-1 (Datum: Dezember 2007) bestimmt werden.

### Beschichtungszusammensetzung

Die erfindungsgemäße Beschichtungszusammensetzung liegt vorzugsweise in Form einer Dispersion oder Lösung, insbesondere in Form einer Dispersion vor.

Die Anteile in Gew.-% aller in den erfindungsgemäßen Beschichtungs-zusammensetzung enthaltenen Komponenten, d.h. der Komponenten (A) einschließlich (A1) und (A2), (B) und (C) sowie gegebenenfalls (D) addieren sich jeweils auf 100 Gew.-%, bezogen auf das Gesamtgewicht der erfindungsgemäßen Beschichtungszusammensetzung.

Vorzugsweise ist die erfindungsgemäße Beschichtungszusammensetzung chromfrei, d.h. sie enthält keine chromhaltigen Verbindungen, insbesondere keine chromathaltigen Verbindungen.

Vorzugsweise ist die erfindungsgemäße Beschichtungszusammensetzung eine lösemittel-basierte, d.h. eine nicht-wässrige Beschichtungszusammensetzung.

Unter dem Begriff "lösemittel-basiert" bzw. "nicht-wässrig" im Zusammenhang mit der erfindungsgemäßen Beschichtungszusammensetzung wird im Sinne der vorliegenden Erfindung vorzugsweise eine entsprechende Beschichtungs-zusammensetzung verstanden, die - als flüssiges Verdünnungsmittel, d.h. als flüssiges Lösemittel und/oder Dispergiermittel - wenigstens ein organisches Lösemittel als Hauptkomponente (hinsichtlich der eingesetzten Verdünnungsmittel), insbesondere die wenigstens eine Komponente (C), enthält. Vorzugsweise beträgt der Anteil an organischen Lösemitteln in der erfindungsgemäßen Beschichtungszusammensetzung, insbesondere der Komponente (C), wenigstens 95,0 Gew.-% oder wenigstens 96,0 Gew.-% oder wenigstens 97,0 Gew.-%, noch bevorzugter wenigstens 97,5 Gew.-% oder wenigstens 98,0 Gew.-% oder wenigstens 98,5 Gew.-%, am meisten bevorzugt wenigstens 99 Gew.-% oder wenigstens 99,5 Gew.-% oder wenigstens 99,9 Gew.-%, jeweils bezogen auf den Gesamtanteil der in der Beschichtungszusammensetzung enthaltenen flüssigen Verdünnungsmitteln.

Vorzugsweise ist die erfindungsgemäße Beschichtungszusammensetzung eine Grundierungsbeschichtungszusammensetzung, d.h. eine Beschichtungszusammensetzung, die sich zur Herstellung einer Grundierungsschicht eignet. Der Begriff "Grundierung" ist dem Fachmann bekannt und beispielsweise definiert im Römpp Lexikon, Lacke und Druckfarben, Georg Thieme Verlag 1998.

Vorzugsweise weist die erfindungsgemäße Beschichtungszusammensetzung einen nicht-flüchtigen Anteil im Bereich von 30 bis 70 Gew.-%, besonders bevorzugt im Bereich von 35 bis 65 Gew.-%, ganz besonders bevorzugt im Bereich von 40 bis 65 Gew.-%, insbesondere von 45 bis 60 Gew.-%, am meisten bevorzugt von 50 bis 60 Gew.-%, jeweils bezogen auf das Gesamtgewicht der Beschichtungszusammensetzung, auf.

Dem Fachmann sind Bestimmungsmetoden zur Ermittlung des nicht-flüchtigen Anteils bekannt. Die Bestimmung erfolgt dabei gemäß der nachstehend beschriebenen Methode.

Die erfindungsgemäße Beschichtungszusammensetzung weist eine Pigmentvolumenkonzentration (PVK) in einem Bereich von 5,0 bis 25,0 % auf. Dem Fachmann ist der Begriff der Pigmentvolumenkonzentration (PVK) bekannt. Dieser Begriff ist definiert in der DIN EN ISO 4618 (Datum: März 2007). Die Pigmentvolumenkonzentration (PVK) bezeichnet dabei das Verhältnis des Volumens der in der Beschichtungszusammensetzung enthaltenen Pigmente und Füllstoffe zum Gesamtvolumen an nichtflüchtigen Bestandteilen in der Beschichtungszusammensetzung, d.h. insbesondere das Verhältnis des Volumens der in der Beschichtungszusammensetzung enthaltenen Pigmente und Füllstoffe zum Gesamtvolumen an nichtflüchtigen Bestandteilen der in der Beschichtungszusammensetzung enthaltenen Pigmente und Füllstoffe und Bindemittel, jeweils multipliziert mit dem Faktor 100.

Vorzugsweise weist die erfindungsgemäße Beschichtungszusammensetzung eine Pigmentvolumenkonzentration (PVK) in einem Bereich von 5,0 bis 22,5 %, bevorzugter in einem Bereich von 5,0 bis 20,0 %, besonders bevorzugt in einem Bereich von 5,0 bis 17,5 %, noch bevorzugter in einem Bereich von 5,0 bis 15,0 % einschließlich eines Bereichs von 7,5 bis 15,0 %, ganz besonders bevorzugt in einem Bereich von 7,5 bis 15,0 %, insbesondere in einem Bereich von 6,5 bis 13 %, auf.

### Bindemittel (A)

Die erfindungsgemäße Beschichtungszusammensetzung enthält wenigstens ein Bindemittel (A) umfassend wenigstens ein polymeres Harz (A1) und wenigstens ein Vernetzungsmittel (A2).

Unter dem Begriff "Bindemittel" werden im Sinne der vorliegenden Erfindung in Einklang mit der DIN EN ISO 4618 (deutsche Fassung, Datum: März 2007) vorzugsweise die vorzugsweise für die Filmbildung verantwortlichen nicht-flüchtigen Anteile einer Beschichtungszusammensetzung wie der erfindungsgemäßen Beschichtungszusammensetzung verstanden. Darin enthaltene Pigmente einschließlich des wenigstens einen Korrosionsschutzpigments (B) und gegebenenfalls vorhandene weitere Pigmente und Füllstoffe werden somit nicht unter den Begriff des Bindemittels subsumiert. Der nicht-flüchtige Anteil kann gemäß DIN EN ISO 3251 (Datum: Juni 2008) nach der nachstehend beschriebenen Methode bestimmt werden. Insbesondere werden unter dem Begriff "Bindemittel" die für die Filmbildung verantwortlichen in der Beschichtungszusammensetzung enthaltenen polymeren Harze (A1) verstanden. Vom Begriff des "Bindemittels" wird zudem in der Beschichtungszusammensetzung vorhandenes Vernetzungsmittel wie beispielsweise Komponente (A2) umfasst.

Vorzugsweise wird zur Herstellung der erfindungsgemäßen Beschichtungszusammensetzung eine Dispersion oder Lösung, besonders bevorzugt wenigstens eine Dispersion, eingesetzt, die das wenigstens eine polymere Harz (A1) enthält. Vorzugsweise wird zur Herstellung der erfindungsgemäßen Beschichtungszusammensetzung wenigstens eine Dispersion oder Lösung, besonders bevorzugt wenigstens eine Dispersion wenigstens eines Vernetzungsmittel (A2) eingesetzt, die vor kurz vor Herstellung der Beschichtungszusammensetzung mit der (A1) enthaltenden Lösung oder Dispersion zusammengegeben wird (2K-Beschichtungszusammensetzung).

Alle üblichen dem Fachmann bekannten Bindemittel eignen sich dabei als Bindemittel (A) der erfindungsgemäßen Beschichtungszusammensetzung.

Vorzugsweise umfasst das Bindemittel (A) wenigstens ein polymeres Harz (A1), welches reaktive funktionelle Gruppen aufweist, die eine Vernetzungsreaktion ermöglichen. Das polymere Harz (A1) ist dabei vorzugsweise ein fremdvernetzendes polymeres Harz. Um eine Vernetzungsreaktion zu ermöglichen, enthält das Bindemittel (A) neben dem wenigstens einen polymeren Harz (A1) zudem wenigstens ein Vernetzungsmittel (A2).

Das in dem Bindemittel (A1) enthaltene polymere Harz bzw. das zudem enthaltene wenigstens eine Vernetzungsmittel (A2) sind vorzugsweise thermisch vernetzbar, beispielsweise durch physikalische Trocknung, vorzugsweise beim Erwärmen auf Ofentemperaturen bei oder oberhalb von 18-23°C vernetzbar.

Jede übliche dem Fachmann bekannte vernetzbare reaktive funktionelle Gruppe kommt als vernetzbare reaktive funktionelle Gruppe des polymeren Harzes (A1) dabei in Betracht. Vorzugsweise weist das polymere Harze (A1) wenigstens eine Art von funktionellen reaktiven Gruppen ausgewählt aus der Gruppe bestehend aus primären Amino-Gruppen, sekundären Amino-Gruppen, Hydroxyl-Gruppen, Thiol-Gruppen, Carboxyl-Gruppen, Gruppen, welche wenigstens eine C=C-Doppelbindung aufweisen, wie beispielsweise Vinyl-Gruppen oder (Meth)acrylat-Gruppen, und Epoxid-Gruppen sowie Mischungen davon, auf. Bevorzugt sind Hydroxyl-Gruppen, Carboxyl-Gruppen und/oder Epoxid-Gruppen, insbesondere Epoxid-Gruppen.

Der Ausdruck "(Meth)acryl" bzw. "(Meth)acrylat" umfasst im Sinne der vorliegenden Erfindung jeweils die Bedeutungen "Methacryl" und/oder "Acryl" bzw. "Methacrylat" und/oder "Acrylat".

Vorzugsweise weist das polymere Harz des Bindemittels (A) einen Anteil an vernetzbaren reaktiven funktionellen Gruppen wie Epoxid-Gruppen im Bereich von 0,15 Gew.-% bis 3,5 Gew.-%, besonders bevorzugt von 0,25 bis 3,0 Gew.-%, ganz besonders bevorzugt von 0,50 bis 2,5 Gew.-%, insbesondere von 1,0 bis 2,0 Gew.-%, jeweils bezogen auf das Gesamtgewicht des Festkörpergehalts des polymeren Harzes (A1) auf.

Das wenigstens eine polymere Harz (A1) des wenigstens einen Bindemittels (A) ist in Gegenwart des wenigstens einen Vernetzungsmittels (A2) vorzugsweise thermisch härtbar, vorzugsweise bei Temperaturen im Bereich von 25°C bis 80°C vernetzbar. Alternativ kann eine solche Härtung schon bei Raumtemperatur, d.h. bei einer Temperatur im Bereich von 18°C bis 23°C erfolgen. Alternativ kann eine solche Härtung erst bei höheren Temperaturen erfolgen, beispielsweise bei Temperaturen ≥ 80°C, ≥ 110°C, ≥ 140°C oder ≥ 170°C.

Vorzugsweise umfasst das Bindemittel (A) wenigstens ein polymeres Harz (A1) ausgewählt aus der Gruppe bestehend aus Polyurethanen, Polyestern, Polyamiden, Polyharnstoffen, Polystyrolen, Polycarbonaten, Poly(meth)acrylaten, Vinylesterbasierten Harzen, Epoxid-Harzen, Phenol-Formaldehydharzen, Melamin-Formaldehydharzen, Phenolharzen und Silikonharzen sowie Mischungen davon, wobei vorzugsweise 70 bis 100 Gew.-% des polymeren Harzes aus wenigstens einem der vorstehend genannten Polymeren ausgewählt sind. Dabei werden unter den genannten Polymeren vorzugsweise jeweils sowohl Homo- als auch entsprechende Co-Polymere verstanden.

Vorzugsweise umfasst das Bindemittel (A) wenigstens ein polymeres Harz (A1) ausgewählt aus der Gruppe bestehend aus Epoxid-Harzen, wobei vorzugsweise 70 bis 100 Gew.-% des polymeren Harzes (A1) des Bindemittels (A) aus wenigstens einem solchen Epoxid-Harz ausgewählt sind. Solche Epoxid-Harze sind dem Fachmann bekannt. Vorzugsweise weisen solche Epoxid-Harze wenigstens zwei jeweils vorzugsweise endständige Epoxid-Gruppen auf. Besonders bevorzugte Epoxid-Harze sind dabei aus Polyphenolen und Epihalohydrinen hergestellte Polyglycidylether von Polyphenolen. Als Polyphenole können insbesondere Bisphenol A und/oder Bisphenol F eingesetzt werden. Weitere geeignete Polyepoxide sind Polyglycidylether von mehrwertigen Alkoholen, wie z. B. Ethylenglykol, Diethylenglykol, Triethylenglykol, 1,2-Propylenglykol- 1,4-Propylenglykol, 1,5-Pentandiol, 1,2,6-Hexantriol, Glycerin und Bis-(4-hydroxycyclohexyl)2,2propan. Beispielsweise eignen sich die kommerziell erhältlichen Produkte Epoxy Novolac® oder D.E.N.® wie zum Beispiel D.E.N.® 438-X80 oder Polypox® wie Polypox® R19 der Firma Dow Chemicals und/oder die kommerziell erhältlichen Produkte Araldite® der Firma Huntsman wie beispielsweise Araldite® EPN 1180, Araldite® EPN 1180 X-80 oder Araldite® DY 3601 als einsetzbare polymere Epoxid-Harze (A1).

Das polymere Harz (A1) weist vorzugsweise einen Epoxidwert in einem Bereich von 175 bis 450, besonders bevorzugt in einem Bereich von 200 bis 400 auf. Der Epoxidwert gibt an, wieviel Mol Epoxid-Gruppen in 100 g an polymeren Harz (A1) enthalten sind. Der Epoxidwert kann aus dem Epoxid-Äquivalentgewicht des polymeren Harzes (A1) berechnet werden (Epoxidwert = 100/Epoxid-Äquivalentgewicht). Das Epoxid-Äquivalentgewicht ist diejenige Masse des polymeren Harzes (A1), welche genau 1 Mol Epoxid-Gruppen enthält. Das Epoxid-Äquivalentgewicht wird vorzugsweise gemäß DIN EN ISO 3001 (Datum: November 1999) bestimmt.

Als Vernetzungsmittel (A2) eignen sich alle dem Fachmann bekannten üblichen Vernetzungsmittel wie beispielsweise Polyamine, Aminoplaste, Phenoplaste, polyfunktionelle Mannich-Basen, Melaminharze, Benzoguanamin-Harze, beta-Hydroxyalkylamide, Tris(alkoxycarbonylamino)triazine, freie Polyisocyanate und/oder blockierte Polyisocyanate, sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten. Ein besonders bevorzugtes Vernetzungsmittel ist ein Polyamin, d.h. ein Amin mit wenigstens zwei Amino-Gruppen, die vorzugsweise ausgewählt sind aus der Gruppe bestehend aus primären und sekundären Amino-Gruppen. Vorzugsweise sind 70 bis 100 Gew.-% des Vernetzungsmittels (A2) aus wenigstens einem Polyamin ausgewählt. Das Vernetzungsmittel (A2) kann dabei zwei oder mehrere verschiedene Polyamine umfassen.

Vorzugsweise umfasst das Bindemittel (A) wenigstens ein polymeres Harz (A1), insbesondere wenigstens ein Epoxid-Harz, welches unter Beteiligung von Amino-Gruppen ausgehärtet bzw. vernetzt wird. Dementsprechend weist das wenigstens eine Vernetzungsmittel (A2) vorzugsweise wenigstens funktionelle Amino-Gruppen auf. Besonders bevorzugt wird als Vernetzungsmittel (A2) daher wenigstens ein Polyamin eingesetzt. Funktionelle Amino-Gruppen aufweisende Polyamine sind dem Fachmann bekannt. Beispielsweise eignen sich die kommerziell erhältlichen Produkte Aradur® wie beispielsweise Aradur® 3204XW29 oder Aradur® 115 BD oder wie Cardolite®, beispielsweise Cardolite® NC 562, als einsetzbare Vernetzungsmittel (A2).

Das Vernetzungsmittel (A2) weist vorzugsweise eine Amin-Zahl in einem Bereich von 50 bis 150, besonders bevorzugt in einem Bereich von 65 bis 120 auf. Die Amin-Zahl wird vorzugsweise gemäß DIN EN ISO 9702 (Datum: Oktober 1998) bestimmt. Alternativ oder zusätzlich (bei Gegenwart wenigstens zweier voneinander verschiedener Vernetzungsmittel (A2)) kann dieses eine Amin-Zahl in einem Bereich von 160 bis 300, besonders bevorzugt in einem Bereich von 170 bis 280 aufweisen.

Zur Beschleunigung der Vernetzung können der Beschichtungszusammensetzung geeignete Katalysatoren zugesetzt werden. Auch solche Katalysatoren sind dem Fachmann bekannt. Beispielsweise kann das kommerziell erhältliche Produkt Ancamine® K54 eingesetzt werden.

Vorzugsweise liegt das relative Gewichtsverhältnis des wenigstens einen polymeren Harzes (A1) und des wenigstens einen Vernetzungsmittels (A2) in der erfindungsgemäßen Beschichtungszusammensetzung zueinander in einem Bereich von 4:1 bis 1:1, besonders bevorzugt in einem Bereich von 3:1 bis 1:1, ganz besonders bevorzugt in einem Bereich von 2,5:1 bis 1:1, insbesondere in einem Bereich von 2,2:1 bis 1:1, am meisten bevorzugt in einem Bereich von 1,8:1 bis 1:1, jeweils bezogen auf den Festkörper-Anteil des wenigstens einen polymeren Harzes (A1) und des wenigstens einen Vernetzungsmittels (A2) innerhalb der erfindungsgemäßen Beschichtungszusammensetzung. Alternativ liegt das relative Gewichtsverhältnis des wenigstens einen polymeren Harzes (A1) und des wenigstens einen Vernetzungsmittels (A2) in der erfindungsgemäßen Beschichtungszusammensetzung zueinander vorzugsweise in einem Bereich von 4:1 bis 1:0,9, besonders bevorzugt in einem Bereich von 3:1 bis 1:0,9, ganz besonders bevorzugt in einem Bereich von 2,5:1 bis 1:0,9, insbesondere in einem Bereich von 2,2:1 bis 1:0,9, am meisten bevorzugt in einem Bereich von 1,8:1 bis 1:0,9, jeweils bezogen auf den Festkörper-Anteil des wenigstens einen polymeren Harzes (A1) und des wenigstens einen Vernetzungsmittels (A2) innerhalb der erfindungsgemäßen Beschichtungszusammensetzung.

Vorzugsweise enthält die erfindungsgemäße Beschichtungszusammensetzung das Bindemittel (A), bezogen auf den Festkörpergehalt des Bindemittels (A), in einer Menge von 10 bis 55 Gew.-%, besonders bevorzugt in einer Menge von 15 bis 50 Gew.-%, ganz besonders bevorzugt in einer Menge von 18 bis 45 Gew.-%, insbesondere bevorzugt in einer Menge von 20 bis 40 Gew.-%, bezogen auf das Gesamtgewicht der Beschichtungszusammensetzung.

Vorzugsweise umfasst das Bindemittel (A) wenigstens ein polymeres Epoxid-Harz (A1) und wenigstens ein wenigstens funktionelle Amino-Gruppen aufweisendes Vernetzungsmittel (A2).

Vorzugsweise umfasst das Bindemittel (A) wenigstens zwei voneinander verschiedene polymere Epoxid-Harze (A1) und/oder wenigstens zwei voneinander verschiedene wenigstens funktionelle Amino-Gruppen aufweisende Vernetzungsmittel (A2).

Vorzugsweise weist das wenigstens eine Vernetzungsmittel (A2) zudem funktionelle Silan-Gruppen auf. Alternativ oder zusätzlich kann der erfindungsgemäßen Beschichtungszusammensetzung zudem wenigstens ein Silan-Gruppen aufweisendes Additiv zugesetzt werden.

### Korrosionsschutzpigment (B)

Die erfindungsgemäße Beschichtungszusammensetzung enthält das wenigstens eine Korrosionsschutzpigment (B) in einer Menge in einem Bereich von 5,0 bis 25,0 Gew.-%, bezogen auf das Gesamtgewicht der Beschichtungszusammensetzung.

Vorzugsweise enthält die erfindungsgemäße Beschichtungszusammensetzung das wenigstens eine Korrosionsschutzpigment (B) dabei in einer Menge in einem Bereich von 5,0 bis <20,0 Gew.-%, besonders bevorzugt in einem Bereich von 5,0 bis 17,5 Gew.-%, ganz besonders bevorzugt in einem Bereich von 5,0 bis 15,0 Gew.-%, noch bevorzugter in einem Bereich von 6,0 bis 14,0 Gew.-%, jeweils bezogen auf das Gesamtgewicht der Beschichtungszusammensetzung.

Vorzugsweise liegt das relative Gewichtsverhältnis des Korrosionsschutzpigment (B) zu weiteren davon verschiedenen gegebenenfalls in der Beschichtungszusammensetzung vorhandenen Pigmenten und Füllstoffen, die beispielsweise als Komponente(n) (D) in der Beschichtungszusammensetzung vorliegen können, in einem Bereich von 25:1 bis 1:5, besonders bevorzugt in einem Bereich von 20:1 bis 1:3 oder in einem Bereich von 20:1 bis 1:1, ganz besonders bevorzugt in einem Bereich von 18:1 bis 1:2 oder in einem Bereich von 18:1 bis 1:1.

Vorzugsweise liegt das relative Gewichtsverhältnis des wenigstens einen Bindemittels (A), bezogen auf den Festkörperanteil des Bindemittels (A) in der Beschichtungszusammensetzung, und des wenigstens einen Korrosionsschutzpigments (B) in der Beschichtungszusammensetzung zueinander in einem Bereich von 5:1 bis 1,5:1, besonders bevorzugt in einem Bereich von 4:1 bis 1,5:1, ganz besonders bevorzugt in einem Bereich von 3,5:1 bis 1,5:1, insbesondere bevorzugt in einem Bereich von 3:1 bis 1,75:1.

Das Korrosionsschutzpigment (B) ist eine Legierung aus Zink und Magnesium und gegebenenfalls wenigstens einem weiteren Metall und/oder Halbmetall ist, welche Zink in einer Menge von wenigstens 70 Gew.-%, Magnesium in einer Menge von wenigstens 20 Gew.-% und das gegebenenfalls vorhandene wenigstens eine weitere Metall und/oder Halbmetall in einer Menge von höchstens 10 Gew.-% enthält, jeweils bezogen auf das Gesamtgewicht des Korrosionsschutzpigments (B), wobei sich die im Korrosionsschutzpigment (B) enthaltenen Mengen in Gew.-% an Zink, Magnesium und dem gegebenenfalls vorhandenen wenigstens einen weiteren Metall und/oder Halbmetall insgesamt auf 100 Gew.-% addieren. Das gegebenenfalls vorhandene wenigstens eine weitere Metall und/oder Halbmetall dient vorzugsweise zur Erhöhung der Duktilität der Legierung.

Vorzugsweise enthält die als Korrosionsschutzpigment (B) eingesetzte Legierung Zink in einer Menge von wenigstens 71 Gew.-%, besonders bevorzugt von wenigstens 72 Gew.-%, ganz besonders bevorzugt von wenigstens 73 Gew.-%, noch bevorzugter von wenigstens 74 Gew.-%, insbesondere bevorzugt von wenigstens 75 Gew.-%, jeweils bezogen auf das Gesamtgewicht des Korrosionsschutzpigments (B). Die Höchstmenge an Zink beträgt dabei vorzugsweise jeweils 80 Gew.-%, bezogen auf das Gesamtgewicht des Korrosionsschutzpigments (B).

Vorzugsweise enthält die als Korrosionsschutzpigment (B) eingesetzte Legierung Magnesium in einer Menge von wenigstens 21 Gew.-%, besonders bevorzugt von wenigstens 22 Gew.-%, ganz besonders bevorzugt von wenigstens 23 Gew.-%, noch bevorzugter von wenigstens 24 Gew.-%, insbesondere bevorzugt von wenigstens 25 Gew.-%, jeweils bezogen auf das Gesamtgewicht des Korrosionsschutzpigments (B). Die Höchstmenge an Magnesium beträgt dabei vorzugsweise jeweils 30 Gew.-%, bezogen auf das Gesamtgewicht des Korrosionsschutzpigments (B).

Vorzugsweise enthält die als Korrosionsschutzpigment (B) eingesetzte Legierung das gegebenenfalls vorhandene wenigstens eine weitere Metall und/oder Halbmetall in einer Menge von höchstens 9,0 Gew.-%, besonders bevorzugt von höchstens 8,0 Gew.-%, ganz besonders bevorzugt von höchstens 7,0 Gew.-%, noch bevorzugter von höchstens 6,0 Gew.-%, insbesondere bevorzugt von höchstens 5,0 Gew.-%, noch bevorzugter von höchstens 4,0 oder 3,0 oder 2,0 Gew.-%, am meisten bevorzugt von höchstens 1,75 oder 1,5 oder 1,25 Gew.-%, jeweils bezogen auf das Gesamtgewicht des Korrosionsschutzpigments (B). Die Mindestmenge an dem gegebenenfalls vorhandenen wenigstens einen weiteren Metall und/oder Halbmetall beträgt dabei vorzugsweise jeweils 0,1 Gew.-% oder 0,5 Gew.-%, jeweils bezogen auf das Gesamtgewicht des Korrosionsschutzpigments (B).

Dem Fachmann ist der Begriff einer "Legierung" bekannt. Demzufolge enthält das erfindungsgemäß eingesetzte Korrosionsschutzpigment (B) vorzugsweise wenigstens eine intermetallische Phase wie beispielsweise wenigstens eine intermetallische Phase aus Zink und Magnesium (ZnMg), vorzugsweise in einer Menge in einem Bereich von wenigstens 30 Gew.-% wie beispielsweise in einem Bereich von 30 bis 50 Gew.-%, besonders bevorzugt von wenigstens 40 Gew.-% wie beispielsweise in einem Bereich von 40 bis 50 Gew.-%, bezogen auf das Gesamtgewicht des Korrosionsschutzpigments (B).

Vorzugsweise ist das Korrosionsschutzpigment (B) eine Legierung aus Zink und Magnesium und gegebenenfalls wenigstens einem weiteren Metall und/oder Halbmetall, welche Zink in einer Menge in einem Bereich von 70 Gew.-% bis 80 Gew.-%, insbesondere in einem Bereich von 70 Gew.-% bis 75 Gew.-%, Magnesium in einer Menge in einem Bereich von 20 Gew.-% bis 30 Gew.-%, insbesondere in einem Bereich von 20 Gew.-% bis 27,5 Gew.-% und das gegebenenfalls vorhandene wenigstens eine weitere Metall und/oder Halbmetall in einer Menge in einem Bereich von 0,1 bis 10 Gew.-% oder von 0,1 bis 7,5 oder von 0,1 bis 5 Gew.-% enthält, jeweils bezogen auf das Gesamtgewicht des Korrosionsschutzpigments (B), wobei sich die im Korrosionsschutzpigment (B) enthaltenen Mengen in Gew.-% an Zink, Magnesium und dem gegebenenfalls vorhandenen wenigstens einen weiteren Metall und/oder Halbmetall insgesamt auf 100 Gew.-% addieren.

Dem Fachmann sind Methoden zur Bestimmung der Anteile an Metallen und/oder Halbmetallen innerhalb einer Legierung wie dem Korrosionsschutzpigment (B) bekannt wie beispielsweise die induktiv-gekoppelte Plasma-Atom-Emissionspektrometrie (ICP-OES) gemäß DIN EN ISO 11885 (Datum: September 2009).

Vorzugsweise liegt das molare Verhältnis von Zink zu Magnesium im Korrosionsschutzpigment (B) in einem Bereich von vorzugsweise 0,75 zu 1 bis 1,35 zu 1, besonders bevorzugt in einem Bereich von 0,85 zu 1 bis 1,25 zu 1, noch bevorzugter in einem Bereich von 0,9 zu 1 bis 1,2 zu 1, insbesondere in einem Bereich von 0,93 zu 1 bis 1,15 zu 1.

Vorzugsweise ist das Korrosionsschutzpigment (B) eine Legierung aus Zink und Magnesium und wenigstens einem weiteren Metall und/oder Halbmetall ausgewählt aus der Gruppe bestehend aus Li, Ce, Be, Y, Ti, Zr, Cr, Mn, Fe, Cu, B, Al, Si und Sn sowie Mischungen davon, besonders bevorzugt ausgewählt aus der Gruppe bestehend aus Li, Ce, Be, Ti, Zr, Mn, Fe, Cu, B, Al, Si und Sn sowie Mischungen davon. Vorzugsweise sind wenigstens 70 bis 100 mol-% des wenigstens einen weiteren Metalls und/oder Halbmetalls ausgewählt aus der Gruppe bestehend aus Li, Ce, Be, Ti, Zr, Mn, Fe, Cu, B, Al, Si und Sn sowie Mischungen davon. Insbesondere ist das Korrosionsschutzpigment (B) eine Legierung aus Zink und Magnesium und wenigstens einem weiteren Metall und/oder Halbmetall ausgewählt aus der Gruppe bestehend aus Li, Ce, Mn und Si sowie Mischungen davon, wobei vorzugsweise wenigstens 70 bis 100 mol-% des wenigstens einen weiteren Metalls und/oder Halbmetalls ausgewählt aus der Gruppe bestehend aus Li, Ce, Mn und Si sowie Mischungen.

Vorzugsweise enthält das erfindungsgemäß eingesetzte Korrosionsschutzpigment (B) als wenigstens ein weiteres Metall und/oder Halbmetall wenigstens Li und/oder Ce und/oder Be und/oder Y und/oder Ti und/oder Zr und/oder Cr und/oder Mn und/oder Fe und/oder Cu und/oder B und/oder Al und/oder Si und/oder Sn. In einer besonders bevorzugten Ausführungsform enthält das erfindungsgemäß eingesetzte Korrosionsschutzpigment (B) als wenigstens ein weiteres Metall und/oder Halbmetall wenigstens Li und/oder Ce und/oder Be und/oder Ti und/oder Mn und/oder Fe und/oder Cu und/oder B und/oder Al und/oder Si, ganz besonders bevorzugt wenigstens Mn und/oder Al und/oder Si. Dabei werden vorzugsweise 70 bis 100 mol-% des innerhalb des Korrosionsschutzpigments vorliegenden weiteren Metalls und/oder Halbmetall durch Li und/oder Ce und/oder Be und/oder Y und/oder Ti und/oder Zr und/oder Cr und/oder Mn und/oder Fe und/oder Cu und/oder B und/oder Al und/oder Si und/oder Sn gebildet.

In einer bevorzugten Ausführungsform enthält das erfindungsgemäß eingesetzte Korrosionsschutzpigment (B) als wenigstens ein weiteres Metall und/oder Halbmetall wenigstens Ti, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Be, Zr, Mn, Fe, Cu, B, Al, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens Li, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Ti, Ce, Be, Zr, Mn, Fe, Cu, B, Al, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens Ce, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ti, Be, Zr, Mn, Fe, Cu, B, Al, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens Be, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Ti, Zr, Mn, Fe, Cu, B, Al, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens Zr, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Be, Ti, Mn, Fe, Cu, B, Al, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens Mn, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Be, Zr, Ti, Fe, Cu, B, Al, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist. Diese Ausführungsform ist insbesondere bevorzugt.

In einer bevorzugten Ausführungsform enthält das erfindungsgemäß eingesetzte Korrosionsschutzpigment (B) als wenigstens ein weiteres Metall und/oder Halbmetall wenigstens Fe, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Be, Zr, Mn, Ti, Cu, B, Al, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens Cu, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Be, Zr, Mn, Fe, Ti, B, Al, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens B, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Be, Zr, Mn, Fe, Cu, Ti, Al, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens Al, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Be, Zr, Mn, Fe, Cu, B, Ti, Si und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens Si, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Be, Zr, Mn, Fe, Cu, B, Al, Ti und Sn und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

In einer bevorzugten Ausführungsform enthält das erfindungsgemäß eingesetzte Korrosionsschutzpigment (B) als wenigstens ein weiteres Metall und/oder Halbmetall wenigstens Sn, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce, Be, Zr, Mn, Fe, Cu, B, Al, Si und Ti und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

Besonders bevorzugt enthält das erfindungsgemäß eingesetzte Korrosionsschutzpigment (B) als wenigstens ein weiteres Metall und/oder Halbmetall wenigstens Mn, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li, Ce und Si und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

Ganz besonders bevorzugt enthält das erfindungsgemäß eingesetzte Korrosionsschutzpigment (B) als wenigstens ein weiteres Metall und/oder Halbmetall wenigstens Si, vorzugsweise in einer Menge in einem Bereich von 0,1 bis 1,0 Gew.-%, bezogen auf das Gesamtgewicht des Korrosionsschutzpigments (B), und gegebenenfalls wenigstens ein weiteres Metall und/oder Halbmetall ausgewählt aus der Gruppe bestehend aus Li und Ce und Mischungen davon, wobei das letztere genannte wenigstens eine weitere Metall und/oder Halbmetall vorzugsweise in einer Menge in einem Bereich von 0,1 bis 4,0 Gew.-%, bezogen auf das Gesamtgewicht des Korrosionsschutzpigments (B), darin enthalten ist.

Vorzugsweise ist das Korrosionsschutzpigment (B) plättchenförmig. Plättchenförmige Korrosionsschutzpigmente sind dem Fachmann bekannt und sind beispielsweise von der Firma Eckart kommerziell erhältlich.

Vorzugsweise weist das Korrosionsschutzpigment (B) eine mittlere Teilchengröße D₅₀ im Bereich von 1 bis 100 µm, besonders bevorzugt im Bereich von 1 bis 50 µm einschließlich eines Bereichs von 1 bis 40 µm, insbesondere bevorzugt von 1 bis 30 µm, am meisten bevorzugt von 5 bis 20 µm, auf. Methoden zur Bestimmung der mittleren Teilchengröße sind dem Fachmann bekannt. Vorzugsweise wird die mittlere Teilchengröße mittels Laserbeugung gemäß ISO 13320-1 (Datum: Oktober 2009) bestimmt. Bei der mittleren Teilchengröße handelt es sich um den D₅₀-Volumen-Medianwert, welcher ausgehend von einer Dispersion der Korrosionsschutzpigmente (B), dessen mittlere Teilchengröße bestimmt werden soll, bestimmt wird ("Nassbestimmung"). Das Streumuster der Probe wird mit einem geeigneten optischen Modell, nämlich der Mie-Theorie, verglichen. Als Gerät wird dabei ein Mastersizer 2000 der Firma Malvern Instruments eingesetzt. Dabei wird ein automatisiertes Standarbeitsverfahren (SOP) zur Steuerung eingesetzt.

Vorzugsweise weist das Korrosionsschutzpigment (B) eine mittlere Plättchendicke im Bereich von 50 nm bis 1000 nm, besonders bevorzugt von 50 nm bis 750 nm, ganze besonders bevorzugt von 75 nm bis 500 nm, insbesondere von 100 bis 500 nm auf. Vorzugsweise wird die mittlere Plättchendicke mittels Rasterelektronenmikroskopie ermittelt. Vorzugsweise erfolgt die Bestimmung der mittleren Plättchendicke gemäß der in DE 10 315 775 A1 beschriebenen Methode.

Die Herstellung von erfindungsgemäß eingesetzten Korrosionsschutzpigmenten (B) ist dem Fachmann beispielsweise aus der WO 2011/058021 A1, WO 2014/029779 A1 und/oder WO 2014/029781 A1 bekannt: die Partikel des erfindungsgemäß eingesetzten Korrosionsschutzpigments (B) werden bevorzugt durch Versprühen (Verdüsen) einer Legierung basierend auf Zink und Magnesium und gegebenenfalls wenigstens einem weiteren Metall und/oder Halbmetall sowie gegebenenfalls wenigstens einem Schmiermittel wie beispielsweise Stearinsäure unter Inertgas hergestellt. Gegebenenfalls können diese im Anschluss durch mechanisches Verformen beispielsweise mittels einer Rührwerkskugelmühle zu plättchenförmigen Korrosionsschutzpigmenten (B) weiterverarbeitet werden.

### Organisches Lösemittel (C)

Die erfindungsgemäße Beschichtungszusammensetzung enthält als Komponente (C) wenigstens ein organisches Lösemittel. Der Begriff des "organischen Lösemittels" ist dem Fachmann bekannt, beispielsweise aus der Richtlinie 1999/13/EG vom 11. März 1999.

Alle dem Fachmann bekannten organischen Lösemittel eignen sich als Komponente (C) der erfindungsgemäßen Beschichtungszusammensetzung. Vorzugsweise ist das wenigstens eine organische Lösemittel ausgewählt aus der Gruppe bestehend aus ein- und mehrwertigen Alkoholen, beispielsweise Methanol, Ethanol, 1-Propanol, 2-Propanol, 1-Butanol, Isobutanol, Methoxypropanol, Ethylenglykol, Ethylglykol, Propylglykol, Butylglykol, Butyldiglykol, 1,2-Propandiol und/oder 1,3-Propandiol, Ethern, beispielsweise Diethylenglykoldimethylether, aliphatischen Kohlenwasserstoffen, aromatischen Kohlenwasserstoffen, beispielsweise Toluol und/oder Xylole, Ketonen, beispielsweise Aceton, N-Methylpyrrolidon, N-Ethylpyrrolidon, Methylisobutylketon, Isophoron, Cyclohexanon und Methylethylketon, Estern, beispielsweise Methoxypropylacetat, Ethylacetat, Butylglykolacetat und Butylacetat, Amiden, beispielsweise Dimethylformamid, und Mischungen davon.

Vorzugsweise enthält die erfindungsgemäße Beschichtungszusammensetzung das wenigstens eine organische Lösemittel (C) in einer Menge von 5 bis 60 Gew.-%, besonders bevorzugt von 10 bis 55 Gew.-%, ganz besonders bevorzugt von 15 bis 50 Gew.-%, noch bevorzugter von 20 bis 40 Gew.-%, jeweils bezogen auf das Gesamtgewicht der Beschichtungszusammensetzung.

### Weitere optionale Komponenten (D)

Die erfindungsgemäße Beschichtungszusammensetzung kann gegebenenfalls wenigstens eine weitere Komponente (D) enthalten.

Vorzugsweise ist dies wenigstens eine weitere Komponente (D) ausgewählt aus der Gruppe bestehend aus vom Korrosionsschutzpigment (B) verschiedenen Pigmenten, Füllstoffen, Antioxidantien, Antistatika, Netz- und Dispergiermitteln, Antiabsetzmitteln, Emulgatoren, Verlaufshilfsmitteln, Löslichkeitsvermittlern, Entschäumungsmitteln, Benetzungsmitteln, Stabilisierungsmitteln, UV- und/oder Licht-Stabilisatoren, Lichtschutzmitteln, Entlüftern, Inhibitoren, Katalysatoren, Wachsen, Flexibilisierungsmitteln, Flammschutzmitteln, Hydrophobierungsmitteln, Hydrophilierungsmitteln, Thixotropiermitteln, Schlagzähmachern, Prozesshilfsmitteln, Weichmachern, und Gemischen aus den vorstehend genannten Komponenten. Der Gehalt an (D) in der erfindungsgemäßen Beschichtungszusammensetzung kann je nach Verwendungszweck sehr breit variieren. Vorzugsweise liegt der Gehalt an der wenigstens einen Komponente (D) bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%, jeweils bezogen auf das Gesamtgewicht der erfindungsgemäßen Beschichtungszusammensetzung.

Der Begriff "Pigment" ist dem Fachmann bekannt, beispielsweise aus der DIN 55945 (Datum: Oktober 2001). Unter einem "Pigment" werden im Sinne der vorliegenden Erfindung vorzugsweise pulver- oder plättchenförmige Verbindungen verstanden, die in dem sie umgebenden Medium, wie beispielsweise in der erfindungsgemäßen Beschichtungszusammensetzung im Wesentlichen, vorzugsweise vollständig, unlöslich sind. Von "Füllstoffen" unterscheiden sich Pigmente vorzugsweise durch ihren Brechungsindex, der für Pigmente ≥1,7 beträgt.

Als vom Korrosionsschutzpigment (B) verschiedene Pigmente eignen sich vorzugsweise Pigmente ausgewählt aus der Gruppe bestehend aus anorganischen und organischen farbgebenden Pigmenten, Effektpigmenten sowie Mischungen davon. Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Beispiele weiterer anorganische farbgebende Pigmente sind Siliziumdioxid, Aluminiumoxid, Aluminiumoxidhydrat, insbesondere Böhmit, Titandioxid, Zirkoniumoxid, Ceroxid und Mischungen hiervon. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Der Begriff "Füllstoff" ist dem Fachmann bekannt, beispielsweise aus der DIN 55945 (Datum: Oktober 2001). Unter einem "Füllstoff" wird im Sinne der vorliegenden Erfindung vorzugsweise eine in der erfindungsgemäßen Beschichtungszusammensetzung im Wesentlichen, vorzugsweise vollständig, unlösliche Substanz verstanden, die insbesondere zur Vergrößerung des Volumens eingesetzt wird. Vorzugsweise unterscheiden sich "Füllstoffe" im Sinne der vorliegenden Erfindung von "Pigmenten" durch ihren Brechungsindex, der für Füllstoffe <1,7 beträgt. Jeder übliche dem Fachmann bekannte Füllstoff kann eingesetzt werden. Beispiele geeigneter Füllstoffe sind Kaolin, Dolomit, Calcit, Kreide, Calciumsulfat, Bariumsulfat, Graphit, Silikate wie Magnesiumsilikate, insbesondere entsprechende Schichtsilikate wie Hectorit, Bentonit, Montmorillonit, Talkum und/oder Glimmer, Kieselsäuren, insbesondere pyrogene Kieselsäuren, Hydroxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Ein weiterer Gegenstand der vorliegenden Erfindung ist ein Verfahren zur Herstellung der erfindungsgemäßen Beschichtungszusammensetzung. Das erfindungsgemäße Verfahren umfasst wenigstens den Schritt des Mischens der Komponenten (A), (B) und (C) und gegebenenfalls (D).

Dieser Schritt des erfindungsgemäßen Verfahrens wird vorzugsweise mittels eines Schnellrührers, Dissolvers oder In-Line-Dissolvers durchgeführt.

### Verwendung zur zumindest teilweisen Beschichtung eines metallischen Substrats mit einer Grundierungsschicht.

Die erfindungsgemäße Beschichtungszusammensetzung eignet sich als eine auf ein gegebenenfalls zumindest teilweise beschichtetes Substrat aufzubringende Grundierungsschicht

Ein weiterer Gegenstand der vorliegenden Erfindung ist daher eine Verwendung der erfindungsgemäßen Beschichtungszusammensetzung zur zumindest teilweisen Beschichtung eines vorzugsweise metallischen Substrats mit einer Grundierungsschicht.

Alle im Zusammenhang mit der erfindungsgemäßen Beschichtungszusammensetzung hierin zuvor beschriebenen bevorzugten Ausführungsformen sind auch bevorzugte Ausführungsformen der erfindungsgemäß eingesetzten Beschichtungszusammensetzung hinsichtlich ihrer Verwendung zur zumindest teilweisen Beschichtung eines Substrats mit einer Grundierungsschicht.

Die erfindungsgemäße Beschichtungszusammensetzung wird vorzugsweise zur zumindest teilweisen Beschichtung solcher Substrate mit einer Grundierungsschicht eingesetzt, die im Flugzeugbau, Schiffsbau und/oder Bootsbau eingesetzt werden, d.h. insbesondere zur entsprechenden Beschichtung von Substraten, die zur Herstellung von Flugzeugen, Schiffen und/oder Booten, insbesondere Flugzeugen, eingesetzt werden.

### Verfahren zur zumindest teilweisen Beschichtung eines Substrats mit einer Grundierungsschicht

Ein weiterer Gegenstand der vorliegenden Erfindung ist ein Verfahren zur zumindest teilweisen Beschichtung eines metallischen Substrats mit einer Grundierungsschicht umfassend wenigstens einen Schritt (1),
(1) zumindest teilweises Kontaktieren des metallischen Substrats mit der erfindungsgemäßen Beschichtungszusammensetzung.

Unter dem Begriff "Kontaktierung" bzw. "Kontaktieren" im Sinne der vorliegenden Erfindung wird vorzugsweise ein Eintauchen des mit der erfindungsgemäßen Beschichtungszusammensetzung zumindest teilweise zu beschichtenden Substrats in die eingesetzte Beschichtungszusammensetzung, ein Besprühen oder Bespritzen der Beschichtungszusammensetzung zumindest teilweise zu beschichtenden Substrats oder ein Aufwalzen des mit der Beschichtungszusammensetzung zumindest teilweise zu beschichtende Substrats auf das Substrat verstanden. Insbesondere wird unter dem Begriff "Kontaktierung" bzw. "Kontaktieren" im Sinne der vorliegenden Erfindung ein Besprühen des mit der Beschichtungszusammensetzung zumindest teilweise zu beschichtenden Substrats verstanden. Ein solches Besprühen kann durch ein elektrostatisches Besprühen, durch ein Luftspraybeschichten oder durch luftloses Spraybeschichten erfolgen. Die Trockenschichtdicke des dadurch erhaltenen Überzugsfilms fällt vorzugsweise in einen Bereich von 5 bis 35 µm, insbesondere 10 bis 25 µm, als gehärteter Überzugsfilm. Der Überzugsfilm kann beispielsweise dadurch gehärtet werden, dass er 10 bis 40 Minuten lang auf 15 bis 40°C erhitzt wird.

Alle im Zusammenhang mit der erfindungsgemäßen Beschichtungszusammensetzung hierin zuvor beschriebenen bevorzugten Ausführungsformen sind auch bevorzugte Ausführungsformen der im erfindungsgemäßen Verfahren eingesetzten erfindungsgemäßen Beschichtungszusammensetzung zur zumindest teilweisen Beschichtung eines Substrats mit einer Grundierungsschicht.

### Verfahren zur zumindest teilweisen Beschichtung eines Substrats mit einer Mehrschichtlackierung

Ein weiterer Gegenstand der vorliegenden Erfindung ist ein Verfahren zur zumindest teilweisen Beschichtung eines Substrats mit einer Mehrschichtlackierung umfassend wenigstens die Schritte
(1) zumindest teilweises Kontaktieren des metallischen Substrats mit der erfindungsgemäßen Beschichtungszusammensetzung zum zumindest teilweisem Aufbringen einer Grundierungsschicht auf das Substrat und
(2) Aufbringen einer weiteren Schicht, vorzugsweise einer Decklackschicht oder einer Klarlackschicht, auf die nach Schritt (1) aufgebrachte Grundierungsschicht.

Alle im Zusammenhang mit der erfindungsgemäßen Beschichtungszusammensetzung hierin zuvor beschriebenen bevorzugten Ausführungsformen sind auch bevorzugte Ausführungsformen der im erfindungsgemäßen Verfahren zur zumindest teilweisen Beschichtung eines Substrats mit einer Mehrschichtlackierung eingesetzten erfindungsgemäßen Beschichtungszusammensetzung.

Üblicherweise wird auf die gemäß Schritt (1) applizierte Grundierungsschicht eine weitere Schicht, insbesondere eine Decklackschicht oder Klarlackschicht, am meisten bevorzugt eine Decklackschicht, aufgebracht. Bevorzugt wird die Grundierungsschicht vor der vor der Applikation der weiteren Schicht gemäß Schritt (2) getrocknet. Unter dem Begriff "Trocknen" ist im Rahmen der vorliegenden Erfindung vorzugsweise das Entfernen von Lösungsmittel aus dem applizierten Lack zu verstehen. Das Trocknen kann zunächst für 10 bis 40 Minuten lang bei 15 bis 40°C erfolgen. Besonders bevorzugt wird vor Durchführung von Schritt (2) für eine Dauer von 1 bis 24 Stunden getrocknet, vorzugsweise bei 15 bis 40°C.

Die generellen Applikationsmethoden der weiteren Schicht gemäß Schritt (2) entsprechen denen, wie sie weiter oben für die Grundierungsschicht beschrieben wurden. Die Applikation der weiteren Schicht wie des Decklacks erfolgt in den üblichen und bekannten Schichtdicken, beispielsweise in Trockenfilmschichtdicken nach der Härtung im Bereich von 15 bis 100 Mikrometer, insbesondere 40 bis 80 oder 50 bis 75 Mikrometer.

Die Härtung erfolgt nach den üblichen und bekannten Methoden wie beispielsweise Erhitzen in einem Umluftofen oder durch Bestrahlen mit IR-Lampen. Möglich ist auch die aktinische Härtung durch beispielsweise UV-Strahlung bei strahlenhärtenden Systemen. Die Härtungsbedingungen, insbesondere die Härtungstemperaturen, richten sich beispielsweise nach der Temperaturempfindlichkeit der verwendeten Substrate oder nach der Wahl der eingesetzten Bindemittel. So kann die Härtung zum Beispiel im Bereich der Raumtemperatur (20 bis 23°C) oder auch bei erhöhten Temperaturen im Bereich von beispielsweise 40°C bis 120°C, bevorzugt von 60°C bis 90°C erfolgen. Auch die Zeitdauer der Härtungsphase wird individuell gewählt und ist unter anderem abhängig von den schon genannten Faktoren (beispielsweise Wahl der Bindemittel und/oder der Härtungstemperaturen). Beispielsweise kann die Härtung über einen Zeitraum von 5 bis 120 Minuten, bevorzugt 10 Minuten bis 40 Minuten, erfolgen. Der Härtung kann gegebenenfalls auch eine Ablüftbeziehungsweise Vortrocknungsphase vorausgehen, beispielsweise bei Raumtemperatur für eine Zeitdauer von 1 bis 60 Minuten. Besonders bevorzugt wird nach Durchführung von Schritt (2) für eine Dauer von 1 bis 168 Stunden getrocknet bzw. gehärtet, vorzugsweise bei 15 bis 40°C. Welche Härtungsbedingungen bei welchen Substraten und/oder Beschichtungszusammensetzungen anzuwenden sind, gehört zum allgemeinen Fachwissen auf dem Gebiet, sodass die Bedingungen vom Fachmann angepasst und ausgewählt werden können.

Ein weiterer Gegenstand der vorliegenden Erfindung ist eine Mehrschichtlackierung erhältlich nach dem erfindungsgemäßen Verfahren.

Ein weiterer Gegenstand der vorliegenden Erfindung ist ein mit der erfindungsgemäßen Beschichtungszusammensetzung zumindest teilweise beschichtetes metallisches Substrat. Ein weiterer Gegenstand der vorliegenden Erfindung ist ein aus wenigstens einem so zumindest teilweise beschichteten Substrat hergestellter Gegenstand oder hergestelltes Bauteil.

### Bestimmungsmethoden

### 1. Filiformkorrosion gemäß DIN EN 3665

Die Bestimmung der Filiformkorrosion dient der Ermittlung der Korrosionsbeständigkeit einer Beschichtung auf einem Substrat. Diese Bestimmung wird gemäß DIN EN 3665 (Datum: August 1997) für das mit einer erfindungsgemäßen Beschichtungszusammensetzung oder Vergleichsbeschichtungszusammensetzung beschichtete Aluminium-basierte Substrat (ALU) über eine Dauer von 1000 h oder 3000 h durchgeführt. Dabei wird die jeweilige Beschichtung, ausgehend von einer linienförmigen Verletzung der Beschichtung, in Form einer linien- oder fadenförmigen Unterkorrosion unterwandert. Die maximale und mittlere Fadenlänge in [mm] werden dabei gemäß DIN EN 3665 (Verfahren 3) ausgemessen. Die maximale und mittlere Fadenlänge sind ein Maß für die Beständigkeit der Beschichtung gegen Korrosion.

### 2. Bestimmung des nicht-flüchtigen Anteils

Die Bestimmung des nicht-flüchtigen Anteils erfolgt gemäß DIN EN ISO 3251 (Datum: Juni 2008). Dabei werden 1 g Probe in eine vorher getrocknete Aluminiumschale eingewogen und 60 Minuten bei 130 °C im Trockenschrank getrocknet, im Exsikkator abgekühlt, und dann zurückgewogen. Der Rückstand bezogen auf die Gesamtmenge der eingesetzten Probe entspricht dem nichtflüchtigen Anteil.

### 3. Gitterschnittprüfung

Die Gitterschnittprüfung dient der Ermittlung der Haftfestigkeit einer Beschichtung auf einem Substrat. Die Gitterschnittprüfung wird gemäß DIN EN ISO 2409 (Datum: August 2007) für die mit einer erfindungsgemäßen Beschichtungszusammensetzung oder einer Vergleichsbeschichtungszusammensetzung beschichteten Substrate, insbesondere Aluminium-basierter Substrate (ALU) durchgeführt, auf die darüber zudem eine Decklackschicht aufgetragen ist. Die Gitterschnittprüfung wird dabei jeweils vor und nach einer Kondenswasser-Konstantklima-Prüfung gemäß DIN EN ISO 6270-2 CH (Datum: September 2005) durchgeführt. Die zu untersuchenden Proben werden dabei in einem Kondenswasser-Konstantklima-Prüfraum kontinuierlich (CH) über eine Dauer von 500 Stunden einer Atmosphäre mit 40°C und 100 % Luftfeuchte ausgesetzt. Die Beurteilung erfolgt anhand von Gitterschnitt-Kennwerten im Bereich von 0 (sehr gute Haftfestigkeit) bis 5 (sehr schlechte Haftfestigkeit).

### 4. Haftfestigkeit

Die Bestimmung der Haftfestigkeit erfolgt gemäß DIN EN ISO 4624 (Datum: August 2003). Dabei wird die Haftfestigkeit durch Abreißen einer Decklackschicht von einer auf einem Substrat aufgebrachten Grundierungsschicht (welche durch Einsatz einer erfindungsgemäßen Beschichtungszusammensetzung oder einer Vergleichsbeschichtungszusammensetzung erhalten wird) durch Messung der minimalen Zugspannung, die erforderlich ist, um diese Beschichtung senkrecht vom grundierten Substrat abzutrennen oder abzureißen, bestimmt.

Die nachfolgenden Beispiele und Vergleichsbeispiele dienen der Erläuterung der Erfindung, sind jedoch nicht einschränkend auszulegen.

### Beispiele und Vergleichsbeispiele

Sofern nicht anders angeführt, handelt es sich bei den Angaben in Teilen um Gewichtsteile und bei Angaben in Prozenten jeweils um Gewichtsprozente.

### 1. Herstellung von erfindungsgemäßen Beschichtungszusammensetzungen

### 1.1 Herstellung einer Vernetzerzusammensetzung H

Die in der nachstehenden Tabelle 1 aufgeführten Komponenten werden in der angegebenen Reihenfolge bei einer Temperatur im Bereich von 18-23°C unter Rühren zur Herstellung der Vernetzerzusammensetzung H zusammengegeben.

**Tabelle 1: Vernetzerzusammensetzung H**

| | **Komponenten zur Herstellung der Vernetzerzusammensetzung H** | **Menge der Komponente in H [Gew.-%]** | **Festkörperanteil der Komponente in H [Gew.%]** |
|---|---|---|---|
| 1 | Aradur® 3204 XW29 | 51,55 | 12,89 |
| 2 | Aradur ® 115 BD | 4,6 | 4,6 |
| 3 | Cardolite® NC 562 | 24,8 | 16,12 |
| 4 | Ancamine® K54 | 0,2 | 0,2 |
| 5 | 3-Methoxypropanol | 6 | - |
| 6 | Isobutanol | 3,75 | - |
| 7 | Xylol | 7,5 | - |
| 8 | Diethylentriamin | 0,6 | 0,6 |
| 9 | Solvent Naphta 160/180 | 1 | - |

| | | | |
|---|---|---|---|
| Aradur® 3204 XW29 ist eine kommerziell erhältliche Lösung eines Polyamin-Addukts der Firma Huntsman. Es weist einen Festkörperanteil von 25 Gew.-%, bezogen auf sein Gesamtgewicht, auf. Aradur® 115 BD ist ein kommerziell erhältliches Polyamidoimidazolin der Firma Vantico mit einem Festkörperanteil von 100 Gew-%. Cardolite® NC 562 ist ein kommerziell erhältliches Phenalkamin-Addukt der Firma Cardolite. Es weist einen Festkörperanteil von 65 Gew.-%, bezogen auf sein Gesamtgewicht, auf. Ancamine® K54 ist ein kommerziell erhältlicher Beschleuniger der Firma Air Products, der 2,4,6-Tri(dimethylaminomethyl)phenol enthält. Diethylentriamin fungiert als Vernetzungsmittel. | | | |

Die Vernetzerzusammensetzung H weist einen nicht-flüchtigen Anteil von 34,41 Gew.-% auf.

### 1.2 Herstellung von Stammlackzusammensetzungen S1, S2, S3, S4 und S5

Die in der nachstehenden Tabelle 2 aufgeführten Komponenten werden in der angegebenen Reihenfolge bei einer Temperatur im Bereich von 18-23°C unter Rühren zu der jeweiligen Stammlackzusammensetzung zusammengegeben.

**Tabelle 2: Stammlackzusammensetzungen**

| | **Komponenten zur Herstellung der jeweiligen Stammlackzusammensetzung** | **S1** | **S2** | **S3** | **S4** | **S5** |
|---|---|---|---|---|---|---|
| 1 | Araldite® EPN X 80 / Gew.-% | 40 | 40 | 40 | 40 | 40 |
| 2 | Araldite® DY 3601 / Gew.-% | 10 | 10 | 10 | 10 | 10 |
| 3 | Disperbyk® 161 / Gew.-% | 0,5 | 0,5 | 0,5 | 0,5 | 0,5 |
| 4 | Aerosil® 972 V / Gew.-% | 1 | 1 | 1 | 1 | 1 |
| 5 | Sipernate® P 820 A / Gew.-% | 1 | 1 | 1 | 1 | 1 |
| 6 | Sikron® SF600 | - | 15 | - | - | - |
| 7 | KP1 / Gew.-% | 34,5 | 19,5 | - | - | - |
| 8 | KP2 / Gew.-% | - | - | - | 16,4 | 31,0 |
| 9 | TiO₂ / Gew.-% | - | - | 10 | 10 | 1,0 |
| 10 | Talk / Gew.-% | - | - | 9,6 | 5,6 | - |
| 11 | Calciumcarbonat / Gew.-% | - | - | 6,0 | - | - |
| 12 | Eisenoxid-Schwarzpigment/ Gew.-% | - | - | 0,4 | - | - |
| 13 | Bariumsulfat / Gew.-% | - | - | 6,0 | - | - |
| 14 | Methylisobutylketon / Gew.-% | 3,4 | 3,4 | - | - | - |
| 15 | Methoxypropanol / Gew.-% | - | - | 3,4 | 3,4 | 3,4 |
| 16 | Cyclohexanon / Gew.-% | - | - | 2,5 | 2,5 | 2,5 |
| 17 | Isobutanol / Gew.-% | 3,5 | 3,5 | 3,5 | 3,5 | 3,5 |
| 18 | Xylol / Gew.-% | 3,7 | 3,7 | 3,7 | 3,7 | 3,7 |
| 19 | Butylglykolacetat / Gew.-% | 0,9 | 0,9 | 0,9 | 0,9 | 0,9 |
| 20 | Plastopal® EBS 400 / Gew.-% | 0,6 | 0,6 | 0,6 | 0,6 | 0,6 |
| 21 | Byk® 325 / Gew.-% | 0,4 | 0,4 | 0,4 | 0,4 | 0,4 |
| 22 | Dow Corning® Z 6040 / Gew.-% | 0,5 | 0,5 | 0,5 | 0,5 | 0,5 |

| | | | | | | |
|---|---|---|---|---|---|---|
| Araldite® EPN X 80 (DEN 438-X80) ist ein polymeres Epoxidharz der Firma Dow Chemicals. Es weist einen Festkörperanteil von 80 Gew.-%, bezogen auf sein Gesamtgewicht, auf. Die verbleibenden 20 Gew.-% sind Xylol. Araldite® DY 3601 ist ein Polypropylenglykol-basiertes Epoxidharz der Firma Dow Chemicals und weist einen Festkörpergehalt von 100 Gew.-% auf. Disperbyk® 161 ist ein kommerziell erhältliches Dispergiermittel der Firma Byk mit einem Festkörpergehalt von 30 Gew.-%. Aerosil® 972 V ist eine kommerziell erhältliche hydrophobierte pyrogene Kieselsäure der Firma Evonik mit einer Dichte von 2,7 g/cm³. Sipernate® P 820 A ist ein kommerziell erhältlicher Füllstoff der Firma Evonik mit einer Dichte von 2,7 g/cm³. Sikron® SF600 ist ein auf SiO₂ basierendes Feinstmehl der Firma Quarzwerke Group mit einer Dichte von 2,7 g/cm³. Plastopal® EBS 400 ist ein kommerziell erhältliches Harnstoff-Formaldehydharz der Firma BASF mit einem Festkörpergehalt von 60 Gew.-%. Byk® 325 ist ein kommerziell erhältliches Verlaufshilfsmittel der Firma Byk mit einem Festkörpergehalt von 52 Gew.-%. Dow Corning® Z 6040 basiert auf Glycidoxypropyltrimethoxysilan. | | | | | | |

Die eingesetzten Pigmente und Füllstoffe TiO₂, Talk, Calciumcarbonat, EisenoxidSchwarzpigment und Bariumsulfat weisen jeweils eine Dichte von 4,5 g/cm³ auf.

Bei KP1 handelt es sich um eine Zusammensetzung, die ein erfindungsgemäß eingesetztes Korrosionsschutzpigment (B) enthält. KP1 enthält 90,5 Gew.-%, bezogen auf das Gesamtgewicht von KP1, des Korrosionsschutzpigments (B), 4,5 Gew.-% Xylol und 5,5 Gew.-% Terlitol®. Terlitol® (White Spirit) ist ein kommerziell erhältliches Lösemittelgemisch. Das Korrosionsschutzpigment (B) enthält ca. >20 Gew.-% Magnesium und >70 Gew.-% Zink. Das Korrosionsschutzpigment (B) enthält zudem wenigstens Si als weiteres Metall und/oder Halbmetall in einer Menge <1 Gew.-%. Die Dichte des Korrosionsschutzpigments (B) beträgt 4,4 g/cm³.

Bei KP2 handelt es sich um eine Zusammensetzung, die ein erfindungsgemäß eingesetztes Korrosionsschutzpigment (B) enthält. KP2 enthält 87 Gew.-%, bezogen auf das Gesamtgewicht von KP2, des Korrosionsschutzpigments (B) und 13 Gew.-% Terlitol®. Terlitol® (White Spirit) ist ein kommerziell erhältliches Lösemittelgemisch. Das Korrosionsschutzpigment (B) enthält >20 Gew.-% Magnesium und >70 Gew.-% Zink. Das Korrosionsschutzpigment (B) enthält zudem wenigstens Si als weiteres Metall und/oder Halbmetall in einer Menge <1 Gew.-%. Die Dichte des Korrosionsschutzpigments (B) beträgt 4,4 g/cm³.

### 1.3 Herstellung von Stammlackzusammensetzungen S6, S7, S8, S9 und S10

Die in der nachstehenden Tabelle 3 aufgeführten Komponenten werden in der angegebenen Reihenfolge bei einer Temperatur im Bereich von 18-23°C unter Rühren zu der jeweiligen Stammlackzusammensetzung zusammengegeben.

**Tabelle 3: Stammlackzusammensetzungen**

| | **Komponenten zur Herstellung der jeweiligen Stammlackzusammensetzung** | **S6** | **S7** | **S8** | **S9** | **S10** |
|---|---|---|---|---|---|---|
| 1 | Araldite® EPN X 80 / Gew.-% | 40 | 40 | 40 | 40 | 24,70 |
| 2 | Araldite® DY 3601 / Gew.-% | 10 | 10 | 10 | 10 | 6,20 |
| 3 | Disperbyk® 161 / Gew.-% | 0,5 | 0,5 | 0,5 | 0,5 | 0,30 |
| 4 | Aerosil® 972 V / Gew.-% | 1 | 1 | 1 | 1 | 0,61 |
| 5 | Sipernate® P 820 A / Gew.-% | 1 | 1 | 1 | 1 | 0,61 |
| 6 | KP1 / Gew.-% | - | 6,0 | 14,0 | 28,0 | 58,0 |
| 7 | TiO₂ / Gew.-% | 10 | 10 | - | - | - |
| 8 | Talk / Gew.-% | 9,6 | 9,6 | 9,6 | 4,0 | - |
| 9 | Calciumcarbonat / Gew.-% | 6,0 | 6,0 | 6,0 | - | - |
| 10 | Eisenoxid-Schwarzpigment/ Gew.-% | 0,4 | 0,4 | - | - | - |
| 11 | Bariumsulfat / Gew.-% | 6,0 | - | 2,40 | - | - |
| 12 | Methoxypropanol / Gew.-% | 3,4 | 3,4 | 3,4 | 3,4 | 2,10 |
| 13 | Cyclohexanon / Gew.-% | 2,5 | 2,5 | 2,5 | 2,5 | 1,5 |
| 14 | Isobutanol / Gew.-% | 3,5 | 3,5 | 3,5 | 3,5 | 2,2 |
| 15 | Xylol / Gew.-% | 3,7 | 3,7 | 3,7 | 3,7 | 2,3 |
| 16 | Butylglykolacetat / Gew.-% | 0,9 | 0,9 | 0,9 | 0,9 | 0,56 |
| 17 | Plastopal® EBS 400 / Gew.-% | 0,6 | 0,6 | 0,6 | 0,6 | 0,37 |
| 18 | Byk® 325 / Gew.-% | 0,4 | 0,4 | 0,4 | 0,4 | 0,25 |
| 19 | Dow Corning® Z 6040 / Gew.-% | 0,5 | 0,5 | 0,5 | 0,5 | 0,30 |

### 1.4 Herstellung von erfindungsgemäßen Beschichtungszusammensetzungen Z1, Z2, Z3, Z4, Z5 und Z6 sowie von Vergleichsbeschichtungszusammensetzungen V1, V2, V3 und V4

Zu 100 Gewichtsteilen jeder der Stammlackzusammensetzungen S1, S2, S3, S4 und S5 werden vor der jeweiligen Applikation auf ein Substrat unter Rühren bei einer Temperatur im Bereich von 18-23°C jeweils 73 Gewichtsteile der Vernetzerzusammensetzung H unter Erhalt der Beschichtungszusammensetzungen Z1, Z2, Z3, Z4 und V1 gegeben.

Zu 100 Gewichtsteilen jeder der Stammlackzusammensetzungen S6, S7, S8 und S9 werden vor der jeweiligen Applikation auf ein Substrat unter Rühren bei einer Temperatur im Bereich von 18-23°C jeweils 70 Gewichtsteile der Vernetzerzusammensetzung H unter Erhalt der Beschichtungszusammensetzungen Z5 und Z6 sowie V2 und V3 gegeben.

Zu 100 Gewichtsteilen der Stammlackzusammensetzung S10 werden vor der jeweiligen Applikation auf ein Substrat unter Rühren bei einer Temperatur im Bereich von 18-23°C 50 Gewichtsteile der Vernetzerzusammensetzung H unter Erhalt der Beschichtungszusammensetzung V4 gegeben.

**Tabelle 4 gibt eine entsprechende Übersicht:**

| **Beschichtungszusammensetzung** | **StammlackKomponente** | **Vernetzerzusammensetzung** | **PVK** [**%]^{#}** | **Menge an Korrosionsschutzpigment (B) [Gew.-%]*** |
|---|---|---|---|---|
| Z1 (erfindungsgemäß) | S1 (100 Gewichtsteile) | H (73 Gewichtsteile) | 10,43 | **18,06** |
| Z2 (erfindungsgemäß) | S2 (100 Gewichtsteile) | H (73 Gewichtsteile) | 13,10 | **10,20** |
| V1 (nicht erfindungsgemäß) | S3 (100 Gewichtsteile) | H (73 Gewichtsteile) | 10,29 | - |
| Z3 (erfindungsgemäß) | S4 (100 Gewichtsteile) | H (73 Gewichtsteile) | 9,78 | **8,25** |
| Z4 (erfindungsgemäß) | S5 (100 Gewichtsteile) | H (73 Gewichtsteile) | 9,31 | **15,59** |
| V2 (nicht erfindungsgemäß) | S6 (100 Gewichtsteile) | H (70 Gewichtsteile) | 10,44 | - |
| V3 (nicht erfindungsgemäß) | S7 (100 Gewichtsteile) | H (70 Gewichtsteile) | 10,32 | 3,19 |
| Z5 (erfindungsgemäß) | S8 (100 Gewichtsteile) | H (70 Gewichtsteile) | 10,17 | **7,45** |
| Z6 (erfindungsgemäß) | S9 (100 Gewichtsteile) | H (70 Gewichtsteile) | 9,92 | **14,91** |
| V4 (nicht erfindungsgemäß) | S10 (100 Gewichtsteile) | H (50 Gewichtsteile) | 21,31 | 35,0 |

| | | | | |
|---|---|---|---|---|
| *Die angegebenen Menge an Korrosionsschutzpigment (B) in Gew.-% bezieht sich jeweils auf das Gesamtgewicht der jeweiligen Beschichtungszusammensetzung. ^{#}Sofern für die einzelnen der Berechnung der PVK relevanten zugrundeliegenden Komponenten keine konkreten Dichten angegeben worden sind, wird der Berechnung jeweils eine Dichte von 1,0 g/cm³ für diese Komponenten zugrunde gelegt. | | | | |

Die Vergleichsbeschichtungszusammensetzung V4 ist ein Vergleichsbeispiel gemäß WO 2014/029779 A2 und WO 2014/029781 A2 (vgl. Basislack gemäß Tabelle auf Seite 45 der WO 2014/029781 A2 bzw. gemäß Tabelle auf den Seiten 40 und 41 der WO 2014/029779 A2): die darin jeweils beschriebenen Beschichtungszusammensetzungen weisen einen Gehalt an darin beschriebenem Korrosionsschutzpigment von >25 Gew.-% (und zudem eine PVK >25%) auf, bezogen auf die jeweilige Beschichtungszusammensetzung.

### 2. Herstellung von beschichteten Substraten mittels einer der erfindungsgemäßen Beschichtungszusammensetzungen oder Vergleichsbeschichtungszusammensetzungen

Eine der Beschichtungszusammensetzungen Z1 bis Z6 oder eine der Vergleichsbeschichtungszusammensetzungen V1 bis V4 werden jeweils als Grundierungsbeschichtungen auf ein Blech einer kommerziell erhältlichen Aluminium-Legierung (EN AW 2024, Substrat T1) als Substrat appliziert. Dabei wird jede der Zusammensetzungen Z1 bis Z6 oder V1 bis V4 direkt nach ihrer vorstehend beschriebenen Herstellung als Grundierungsschicht auf jedes Substrat appliziert.

Die jeweils eingesetzten Bleche weisen eine Gesamtfläche von ca. 70 cm² auf. Jedes Blech wurde mittels einer Weinsäure-Schwefelsäure-Anodisierung (TSA) gemäß DIN EN 4704 (Datum: Mai 2012) vorbehandelt.

Auf jedes Substrat (T1) wird einseitig eine der erfindungsgemäßen Beschichtungszusammensetzungen Z1 bis Z6 mittels Aufsprühen mit einer Spritzpistole appliziert. Die Trockenschichtdicke beträgt jeweils 20-25 µm. Im Anschluss erfolgt eine Trocknung durch Lagerung über 24 h bei 15-25 °C.

Auf die so erhaltenen beschichteten Substrate wird im Anschluss jeweils eine Decklackschicht in einer Trockenschichtdicke von 60 bis 80 µm unter Erhalt der beschichteten Bleche T1Z1, T1Z2, T1Z3, T1Z4, T1Z5 und T1Z6 sowie T1V1, T1V2, T1V3 und T1V4 appliziert. Zum Aufbringen der Decklackschicht wird jeweils das kommerzielle Produkt Glasurit® der Reihe 68 (RAL 9010), ein 2K-Polyurethanbasierter Decklack, eingesetzt. Die anschließende Trocknung bzw. Härtung erfolgte mittels einer Lagerung der beschichteten Bleche über eine Dauer von 7 Tagen bei 15-25 °C.

### 3. Untersuchung der Haftungseigenschaften und der Korrosionsschutzwirkung der beschichteten Substrate

Es werden die mit einer der Beschichtungszusammensetzungen Z1 bis Z6 bzw. V1 bis V4 beschichteten Substrate T1Z1, T1Z2, T1Z3, T1Z4, T1Z5 und T1Z6 sowie T1V1, T1V2, T1V3 und T1V4 untersucht.

Alle nachstehenden Prüfungen wurden entsprechend der vorstehend angegebenen Bestimmungsmethoden durchgeführt. Jeder Wert in Tabelle 5a und 5b, in der die jeweiligen Resultate zusammengefasst sind, ist der Mittelwert aus einer Zweifach- oder Dreifachbestimmung.

**Tabelle 5a:**

| **Beschichtetes Substrat** | **Haftung¹** | **Haftung²** | **Haftfestigkeit [N/mm²]³** | **Haftfestigkeit [N/mm²]⁴** |
|---|---|---|---|---|
| T1Z1 | **0** | **1** | **2,80** | **3,10** |
| T1Z2 | **0** | **0** | **3,40** | **3,60** |
| T1V1 | 0 | 0 | 3,50 | 5,03 |
| T1Z3 | **0** | **0** | **2,86** | **4,11** |
| T1Z4 | **0** | **0** | **3,09** | **3,66** |

| | | | | |
|---|---|---|---|---|
| ¹Bewertung der Haftung zwischen Beschichtung und Decklack mittels Gitterschnittprüfung vor Durchführung der Kondenswasser-Konstantklima-Prüfung ²Bewertung der Haftung zwischen Beschichtung und Decklack mittels Gitterschnittprüfung nach Durchführung der Kondenswasser-Konstantklima-Prüfung ³Haftfestigkeit in [N/mm²] vor Durchführung der Kondenswasser-Konstantklima-Prüfung ⁴Haftfestigkeit in [N/mm²] nach Durchführung der Kondenswasser-Konstantklima-Prüfung | | | | |

**Tabelle 5b:**

| **Beschichtetes Substrat** | **Haftung¹** | **Haftung²** | **Haftung³** |
|---|---|---|---|
| T1V2 | 0 | 0 | 4,04 |
| T1V3 | 0 | 0 | 5,48 |
| T1Z5 | **0** | **0** | **5,54** |
| T1Z6 | **0** | **0** | **4,46** |
| T1V4 | 1 | 5 | -* |

| | | | |
|---|---|---|---|
| ¹Bewertung der Haftung zwischen Beschichtung und Decklack mittels Gitterschnittprüfung vor Durchführung der Kondenswasser-Konstantklima-Prüfung ²Bewertung der Haftung zwischen Beschichtung und Decklack mittels Gitterschnittprüfung nach Durchführung der Kondenswasser-Konstantklima-Prüfung ³Haftfestigkeit in [N/mm²] nach Durchführung der Kondenswasser-Konstantklima-Prüfung *Es wird eine Delaminierung des Decklacks vom beschichteten Substrat beobachtet. | | | |

Wie aus Tabelle 5b ersichtlich ist kann mit einer Vergleichsbeschichtungszusammensetzung V4 (gemäß WO 2014/029779 A2 und WO 2014/029781 A2) mit einem vergleichsweise hohem Pigment-Gehalt an darin beschriebenem Korrosionsschutzpigment >25 Gew.-% und einer PVK >25% nach Durchführung der Kondenswasser-Konstantklima-Prüfung keine ausreichende Haftung des Decklacks auf dem mit der erfindungsgemäßen Beschichtungszusammensetzung beschichteten Substrat T1 mehr beobachtet werden, da es zu einer Delaminierung bzw. einer ungenügenden Haftung nach der durchgeführten Gitterschnittprüfung kommt. Im Gegensatz dazu zeichnen sich die erfindungsgemäßen Beschichtungszusammensetzungen mit einem Gehalt an Korrosionsschutzpigment (B) in einem Bereich von 5,0 bis 25,0 Gew.-% und einer PVK im Bereich von 5,0 bis 25,0% auch unter diesen Bedingungen durch gute Haftungseigenschaften aus.

Entsprechende Haftungseigenschaften können zwar auch mit V2 (kein Korrosionsschutzpigment (B)) und V3 (Gehalt an Korrosionsschutzpigment (B) <5 Gew.-%) erzielt werden, jedoch wird mit diesen Vergleichsbeschichtungszusammensetzungen im Vergleich zu den erfindungsgemäßen Beschichtungszusammensetzungen kein ausreichender Korrosionsschutz mehr erzielt, wie in Tabelle 5c verdeutlicht wird:

**Tabelle 5c:**

| **Beschichtetes Substrat** | **Maximale Fadenlänge [mm] nach 1000 h einer Filiformkorrosion** |
|---|---|
| T1V2 | 11,2 |
| T1V3 | 10,2 |
| T1Z5 | **7,39** |
| T1Z6 | **6,45** |

## Patentansprüche

1. Eine Beschichtungszusammensetzung umfassend
wenigstens ein Bindemittel (A) enthaltend wenigstens ein polymeres Harz (A1) und wenigstens ein Vernetzungsmittel (A2),
wenigstens ein Korrosionsschutzpigment (B) und
wenigstens ein organisches Lösemittel (C) und gegebenenfalls wenigstens eine weitere Komponente (D),
zur zumindest teilweisen Beschichtung eines metallischen Substrats mit einer Grundierungsschicht, **dadurch gekennzeichnet, dass**
das Korrosionsschutzpigment (B) eine Legierung aus Zink und Magnesium und gegebenenfalls wenigstens einem weiteren Metall und/oder Halbmetall ist, welche Zink in einer Menge von wenigstens 70 Gew.-%, Magnesium in einer Menge von wenigstens 20 Gew.-% und das gegebenenfalls vorhandene wenigstens eine weitere Metall und/oder Halbmetall in einer Menge von höchstens 10 Gew.-% enthält, jeweils bezogen auf das Gesamtgewicht des Korrosionsschutzpigments (B), wobei sich die im Korrosionsschutzpigment (B) enthaltenen Mengen in Gew.-% an Zink, Magnesium und dem gegebenenfalls vorhandenen wenigstens einen weiteren Metall und/oder Halbmetall insgesamt auf 100 Gew.-% addieren,
die Beschichtungszusammensetzung eine Pigmentvolumenkonzentration (PVK) in einem Bereich von 5,0 bis 25,0 % aufweist und dadurch, dass
die Beschichtungszusammensetzung das Korrosionsschutzpigment (B) in einer Menge in einem Bereich von 5,0 bis 25,0 Gew.-%, bezogen auf das Gesamtgewicht der Beschichtungszusammensetzung, enthält.

2. Die Beschichtungszusammensetzung gemäß Anspruch 1, **dadurch gekennzeichnet, dass** die Beschichtungszusammensetzung eine Pigmentvolumenkonzentration (PVK) in einem Bereich von 5,0 bis 20,0 % aufweist.

3. Die Beschichtungszusammensetzung gemäß Anspruch 1 oder 2, **dadurch gekennzeichnet, dass** die Beschichtungszusammensetzung das Korrosionsschutzpigment (B) in einer Menge in einem Bereich von 5,0 bis <20,0 Gew.-%, bezogen auf das Gesamtgewicht der Beschichtungszusammensetzung, enthält.

4. Die Beschichtungszusammensetzung gemäß einem der vorstehenden Ansprüche, **dadurch gekennzeichnet, dass** das relative Gewichtsverhältnis des Korrosionsschutzpigments (B) zu weiteren davon verschiedenen gegebenenfalls in der Beschichtungszusammensetzung vorhandenen Pigmenten und Füllstoffen in einem Bereich von 25:1 bis 1:5 liegt.

5. Die Beschichtungszusammensetzung gemäß einem der vorstehenden Ansprüche, **dadurch gekennzeichnet, dass** das relative Gewichtsverhältnis des wenigstens einen Bindemittels (A), bezogen auf den Festkörperanteil des Bindemittels (A) in der Beschichtungszusammensetzung, und des wenigstens einen Korrosionsschutzpigments (B) in der Beschichtungszusammensetzung zueinander in einem Bereich von 5:1 bis 1,5:1 liegt.

6. Die Beschichtungszusammensetzung gemäß einem der vorstehenden Ansprüche, **dadurch gekennzeichnet, dass** das Korrosionsschutzpigment (B) eine Legierung aus Zink und Magnesium und gegebenenfalls wenigstens einem weiteren Metall und/oder Halbmetall ist, welche Zink in einer Menge in einem Bereich von 70 Gew.-% bis 80 Gew.-%, Magnesium in einer Menge in einem Bereich von 20 Gew.-% bis 30 Gew.-% und das gegebenenfalls vorhandene wenigstens eine weitere Metall und/oder Halbmetall in einer Menge in einem Bereich von 0,1 bis 8 Gew.-% enthält, jeweils bezogen auf das Gesamtgewicht des Korrosionsschutzpigments (B), wobei sich die im Korrosionsschutzpigment (B) enthaltenen Mengen in Gew.-% an Zink, Magnesium und dem gegebenenfalls vorhandenen wenigstens einen weiteren Metall und/oder Halbmetall insgesamt auf 100 Gew.-% addieren.

7. Die Beschichtungszusammensetzung gemäß einem der vorstehenden Ansprüche, **dadurch gekennzeichnet, dass** wenigstens 70 bis 100 mol-% des im Korrosionsschutzpigment (B) enthaltenen weiteren Metalls und/oder Halbmetalls ausgewählt sind aus der Gruppe bestehend aus Li, Ce, Be, Y, Ti, Zr, Cr, Mn, Fe, Cu, B, Al, Si und Sn sowie Mischungen davon.

8. Die Beschichtungszusammensetzung gemäß einem der vorstehenden Ansprüche, **dadurch gekennzeichnet, dass** das Korrosionsschutzpigment (B) plättchenförmig ist und eine mittlere Teilchengröße D₅₀ im Bereich 1 bis 50 µm und eine mittlere Plättchendicke im Bereich von 50 bis 750 nm aufweist.

9. Die Beschichtungszusammensetzung gemäß einem der vorstehenden Ansprüche, **dadurch gekennzeichnet, dass** das Bindemittel (A) wenigstens ein polymeres Epoxid-Harz (A1) und wenigstens ein wenigstens funktionelle Amino-Gruppen aufweisendes Vernetzungsmittel (A2) umfasst.

10. Die Beschichtungszusammensetzung gemäß einem der vorstehenden Ansprüche, **dadurch gekennzeichnet, dass** das Bindemittel (A) wenigstens zwei voneinander verschiedene polymere Epoxid-Harze (A1) und/oder wenigstens zwei voneinander verschiedene wenigstens funktionelle Amino-Gruppen aufweisende Vernetzungsmittel (A2) umfasst.

11. Die Beschichtungszusammensetzung gemäß einem der vorstehenden Ansprüche, **dadurch gekennzeichnet, dass** das wenigstens eine Vernetzungsmittel (A2) zudem funktionelle Silan-Gruppen aufweist.

12. Eine Verwendung der Beschichtungszusammensetzung gemäß einem der Ansprüche 1 bis 11 zur zumindest teilweisen Beschichtung eines metallischen Substrats mit einer Grundierungsschicht.

13. Ein Verfahren zur zumindest teilweisen Beschichtung eines metallischen Substrats mit einer Grundierungsschicht umfassend wenigstens einen Schritt (1),
(1) zumindest teilweises Kontaktieren des metallischen Substrats mit der Beschichtungszusammensetzung gemäß einem der Ansprüche 1 bis 11.

14. Ein Verfahren zur zumindest teilweisen Beschichtung eines Substrats mit einer Mehrschichtlackierung umfassend wenigstens die Schritte (1) und (2), nämlich
(1) zumindest teilweises Kontaktieren des metallischen Substrats mit der Beschichtungszusammensetzung gemäß einem der Ansprüche 1 bis 11 zum zumindest teilweisem Aufbringen einer Grundierungsschicht auf das Substrat und
(2) Aufbringen einer Decklackschicht auf die nach Schritt (1) aufgebrachte Grundierungsschicht.

15. Ein zumindest teilweise mit der Beschichtungszusammensetzung gemäß einem der Ansprüche 1 bis 11 beschichtetes metallisches Substrat.

## Claims

1. A coating composition comprising
at least one binder (A) comprising at least one polymeric resin (A1) and at least one crosslinking agent (A2),
at least one anticorrosion pigment (B), and
at least one organic solvent (C), and optionally at least one further component (D),
for at least partial coating of a metallic substrate with a primer coat, **characterized in that**
the anticorrosion pigment (B) is an alloy of zinc and magnesium and optionally at least one further metal and/or semimetal, and comprises zinc in an amount of at least 70 wt%, magnesium in an amount of at least 20 wt%, and the optionally present at least one further metal and/or semimetal in an amount of at most 10 wt%, based in each case on the total weight of the anticorrosion pigment (B), where the amounts in % by weight of zinc, of magnesium, and of the optionally present at least one further metal and/or semimetal that are present in the anticorrosion pigment (B) add up in total to 100 wt%,
the coating composition has a pigment volume concentration (PVC) in a range from 5.0% to 25.0%, and **in that**
the coating composition comprises the anticorrosion pigment (B) in an amount in a range from 5.0 to 25.0 wt%, based on the total weight of the coating composition.

2. The coating composition according to Claim 1, **characterized in that** the coating composition has a pigment volume concentration (PVC) in a range from 5.0% to 20.0%.

3. The coating composition according to Claim 1 or 2, **characterized in that** the coating composition comprises the anticorrosion pigment (B) in an amount in a range from 5.0 to < 20.0 wt%, based on the total weight of the coating composition.

4. The coating composition according to any of the preceding claims, **characterized in that** the relative weight ratio of the anticorrosion pigment (B) to further, different pigments and fillers optionally present in the coating composition is in a range from 25:1 to 1:5.

5. The coating composition according to any of the preceding claims, **characterized in that** the relative weight ratio of the at least one binder (A), based on the solids fraction of the binder (A) in the coating composition, and of the at least one anticorrosion pigment (B) in the coating composition to one another is in a range from 5:1 to 1.5:1.

6. The coating composition according to any of the preceding claims, **characterized in that** the anticorrosion pigment (B) is an alloy of zinc and magnesium and optionally at least one further metal and/or semimetal, and comprises zinc in an amount in a range from 70 wt% to 80 wt%, magnesium in an amount in a range from 20 wt% to 30 wt%, and the optionally present at least one further metal and/or semimetal in an amount in a range from 0.1 to 8 wt%, based in each case on the total weight of the anticorrosion pigment (B), and the amounts in weight % of zinc, of magnesium, and of the optionally present at least one further metal and/or semimetal that are present in the anticorrosion pigment (B) adding up in total to 100 wt%.

7. The coating composition according to any of the preceding claims, **characterized in that** at least 70 to 100 mol% of the further metal and/or semimetal present in the anticorrosion pigment (B) are selected from the group consisting of Li, Ce, Be, Y, Ti, Zr, Cr, Mn, Fe, Cu, B, Al, Si, and Sn, and also mixtures thereof.

8. The coating composition according to any of the preceding claims, **characterized in that** the anticorrosion pigment (B) is platelet-shaped and has an average particle size D₅₀ in the 1 to 50 µm range and an average platelet thickness in the range from 50 to 750 nm.

9. The coating composition according to any of the preceding claims, **characterized in that** the binder (A) comprises at least one polymeric epoxy resin (A1) and at least one crosslinking agent (A2) having at least functional amino groups.

10. The coating composition according to any of the preceding claims, **characterized in that** the binder (A) comprises at least two different polymeric epoxy resins (A1) and/or at least two different crosslinking agents (A2) having at least functional amino groups.

11. The coating composition according to any of the preceding claims, **characterized in that** the at least one crosslinking agent (A2) also has functional silane groups.

12. A use of the coating composition according to any of Claims 1 to 11 for the at least partial coating of a metallic substrate with a primer coat.

13. A method for the at least partial coating of a metallic substrate with a primer coat, comprising at least a step (1),
(1) at least partly contacting the metallic substrate with the coating composition according to any of Claims 1 to 11.

14. A method for the at least partial coating of a substrate with a multicoat paint system, comprising at least steps (1) and (2), namely
(2) at least partly contacting the metallic substrate with the coating composition according to any of Claims 1 to 11 for the at least partial application of a primer coat to the substrate,
and
(3) applying a topcoat to the primer coat applied by step (1).

15. A metallic substrate at least partially coated with the coating composition according to any of Claims 1 to 11.

## Revendications

1. Composition de revêtement, comprenant
- au moins un liant (A) contenant au moins une résine polymère (A1) et au moins un réticulant (A2),
- au moins un pigment (B) de protection contre la corrosion et
- au moins un solvant organique (C) et le cas échéant au moins un autre composant (D),
pour le revêtement au moins partiel d'un substrat métallique par une couche d'apprêt, **caractérisée en ce que** le pigment (B) de protection contre la corrosion est un alliage de zinc et de magnésium et le cas échéant d'au moins un autre métal et/ou semi-métal, qui contient du zinc en une quantité d'au moins 70% en poids, du magnésium en une quantité d'au moins 20% en poids et ledit au moins un autre métal et/ou semi-métal le cas échéant présent en une quantité d'au plus 10% en poids, à chaque fois par rapport au poids total du pigment (B) de protection contre la corrosion, la somme des quantités en % en poids de zinc, de magnésium et dudit au moins un autre métal et/ou semi-métal le cas échéant présent contenues dans le pigment (B) de protection contre la corrosion valant 100% en poids,
la composition de revêtement présente une concentration volumique en pigments (CVP) dans une plage de 5,0 à 25,0% et **en ce que**
la composition de revêtement contient le pigment (B) de protection contre la corrosion en une quantité dans une plage de 5,0 à 25,0% en poids, par rapport au poids total de la composition de revêtement.

2. Composition de revêtement selon la revendication 1, **caractérisée en ce que** la composition de revêtement présente une concentration volumique en pigments (CVP) dans une plage de 5,0 à 20,0%.

3. Composition de revêtement selon la revendication 1 ou 2, **caractérisée en ce que** la composition de revêtement contient le pigment (B) de protection contre la corrosion en une quantité dans une plage de 5,0 à < 20,0% en poids, par rapport au poids total de la composition de revêtement.

4. Composition de revêtement selon l'une quelconque des revendications précédentes, **caractérisée en ce que** le rapport pondéral relatif du pigment (B) de protection contre la corrosion aux autres pigments et charges différents de celui-ci, le cas échéant présents dans la composition de revêtement, se situe dans une plage de 25:1 à 1:5.

5. Composition de revêtement selon l'une quelconque des revendications précédentes, **caractérisée en ce que** le rapport pondéral relatif, l'un par rapport à l'autre, dudit au moins un liant (A), par rapport à la proportion de solides du liant (A) dans la composition de revêtement, et dudit au moins un pigment (B) de protection contre la corrosion dans la composition de revêtement se situe dans une plage de 5:1 à 1,5:1.

6. Composition de revêtement selon l'une quelconque des revendications précédentes, **caractérisée en ce que** le pigment (B) de protection contre la corrosion est un alliage de zinc et de magnésium et le cas échéant d'au moins un autre métal et/ou semi-métal, qui contient du zinc en une quantité dans une plage de 70% en poids à 80% en poids, du magnésium en une quantité dans une plage de 20% en poids à 30% en poids et ledit au moins un autre métal et/ou semi-métal le cas échéant présent en une quantité dans une plage de 0,1% en poids à 8% en poids, à chaque fois par rapport au poids total du pigment (B) de protection contre la corrosion, la somme des quantités en % en poids de zinc, de magnésium et dudit au moins un autre métal et/ou semi-métal le cas échéant présent contenues dans le pigment (B) de protection contre la corrosion valant 100% en poids.

7. Composition de revêtement selon l'une quelconque des revendications précédentes, **caractérisée en ce qu'**au moins 70 à 100% en mole de l'autre métal et/ou semi-métal contenu dans le pigment (B) de protection contre la corrosion sont choisis dans le groupe constitué par Li, Ce, Be, Y, Ti, Zr, Cr, Mn, Fe, Cu, B, Al, Si et Sn ainsi que leurs mélanges.

8. Composition de revêtement selon l'une quelconque des revendications précédentes, **caractérisée en ce que** le pigment (B) de protection contre la corrosion est sous forme de plaquettes et présente une grosseur moyenne de particule D₅₀ dans la plage de 1 à 50 µm et une épaisseur moyenne de plaquette dans la plage de 50 à 750 nm.

9. Composition de revêtement selon l'une quelconque des revendications précédentes, **caractérisée en ce que** le liant (A) comprend au moins une résine époxyde (A1) polymère et au moins un réticulant (A2) présentant au moins des groupes amino fonctionnels.

10. Composition de revêtement selon l'une quelconque des revendications précédentes, **caractérisée en ce que** le liant (A) comprend au moins deux résines époxydes (A1) polymères différentes l'une de l'autre et/ou au moins deux réticulants (A2) différents l'un de l'autre présentant au moins des groupes amino fonctionnels.

11. Composition de revêtement selon l'une quelconque des revendications précédentes, **caractérisée en ce que** ledit au moins un réticulant (A2) présente en outre des groupes silane fonctionnels.

12. Utilisation de la composition aqueuse de revêtement selon l'une quelconque des revendications 1 à 11 pour le revêtement au moins partiel d'un substrat métallique par une couche d'apprêt.

13. Procédé pour le revêtement au moins partiel d'un substrat métallique par une couche d'apprêt, comprenant au moins une étape (1)
(1) mise en contact au moins partielle du substrat métallique avec la composition de revêtement selon l'une quelconque des revendications 1 à 11.

14. Procédé pour le revêtement au moins partiel d'un substrat par un laquage multicouche, comprenant au moins les étapes (1) et (2), à savoir
(1) mise en contact au moins partielle du substrat métallique avec la composition de revêtement selon l'une quelconque des revendications 1 à 11 pour l'application au moins partielle d'une couche d'apprêt sur le substrat et
(2) application d'une couche de laque de recouvrement sur la couche d'apprêt appliquée selon l'étape (1).

15. Substrat métallique revêtu au moins partiellement par la composition de revêtement selon l'une quelconque des revendications 1 à 11.
